# EUROPÄISCHE PATENTSCHRIFT

(11) **EP 3 693 326 B1**
(45) Veröffentlichungstag und Bekanntmachung des Hinweises auf die Patenterteilung: **08.10.2025**
(21) Anmeldenummer: 20154234.7
(22) Anmeldetag: 29.01.2020
(51) Int. Cl.: B66F 9/06, B65G 69/28, B66F 9/18, B65G 1/137, B66F 9/075

(54) **ÜBERFÜHRUNGSANORDNUNG**
TRANSFER ARRANGEMENT
DISPOSITIF DE TRANSFERT

(30) Priorität: 07.02.2019 DE 102019201599
(43) Veröffentlichungstag der Anmeldung: 12.08.2020
(73) Patentinhaber: BHS Intralogistics GmbH, 93073 Neutraubling (DE)
(72) Erfinder: Ruhland, Karl, 92536 Pfreimd (DE); Huber, Thomas, 93059 Regensburg (DE); Plschek, Klaus, 93086 Wörth (DE)
(74) Vertreter: Rau, Schneck & Hübner Patentanwälte Rechtsanwälte PartGmbB

(56) Entgegenhaltungen:
- EP-A2- 0 995 557
- CN-A- 109 179 269
- BOUGUERRA A ET AL: "An autonomous robotic system for load transportation", 2009 IEEE CONFERENCE ON EMERGING TECHNOLOGIES & FACTORY AUTOMATION : ETFA 2009 ; PALMA DE MALLORCA, SPAIN, 22 - 25 SEPTEMBER 2009, IEEE, PISCATAWAY, NJ, USA, 22 September 2009 (2009-09-22), pages 1 - 4, XP031575813, ISBN: 978-1-4244-2727-7
- ABRONSIUS70: "Report about the MALTA project in Swedish Television", YOUTUBE, 5 May 2009 (2009-05-05), pages 1 pp., XP054981122, Retrieved from the Internet <URL:https://www.youtube.com/watch?v=x_m8qKt1jB4&feature=youtu.be> [retrieved on 20201119]
- ABDELBAKI BOUGUERRA ET AL: "MALTA : a system of multiple autonomous trucks for load transportation", PUBLIKATIONER FRÅN ÖREBRO UNIVERSITET, 1 January 2009 (2009-01-01), XP055752684, Retrieved from the Internet <URL:http://130.243.105.49/Research/MRO/publications/2009/Bouguerra_etal_2009-ECMR09-MALTA_A_System_of_Multiple_Autonomous_Trucks_for_Load_Transportation.pdf> [retrieved on 20201119]
- BANKOFRIVER: "Karstad demo industri_1.wmv", 29 March 2010 (2010-03-29), pages 1, XP054981123, Retrieved from the Internet <URL:https://www.youtube.com/watch?v=pP-_hOddV-w&feature=emb_logo> [retrieved on 20201119]

## Beschreibung

Die Erfindung betrifft eine automatisierte Überführungsanordnung zum Überführen von Gütern, wie Stückgütern, insbesondere Materialrollen, gemäß dem Oberbegriff des Anspruchs 1. Ferner richtet sich die Erfindung auf eine Gesamtanlage mit mindestens einer derartigen Überführungsanordnung und insbesondere einer Anlage, insbesondere Wellpappeanlage.

Die Erfindung richtet sich ferner auf ein Güter-Überführungs-Verfahren, insbesondere Materialrollen-Überführungs-Verfahren, zum automatisierten Überführen von Gütern, insbesondere Materialrollen.

Aus dem Stand der Technik sind bereits gattungsgemäße Überführungsanordnungen für Güter, insbesondere Materialrollen, bekannt. Diesen haftet oftmals der Nachteil an, dass die bekannten Überführungsanordnungen einen hohen Platzbedarf bei dem Greifen des zu greifenden Guts haben.

Die gattungsgemäße CN 109179269 A offenbart ein automatisiert geführtes Transportfahrzeug. Das Transportfahrzeug wird für den automatisierten Transport schwerer zylindrischer Gegenstände verwendet. Es umfasst einen Rahmen, Räder und eine Greifeinrichtung. Die Greifeinrichtung wiederum hat Greifarme, die synchron geschlossen werden, damit ein Schwerpunkt mittig zu dem Transportfahrzeug liegt. Der Transport der schweren zylindrischen Gegenstände ist nicht immer zuverlässig und sicher.

Der wissenschaftliche Artikel: "An Autonomous Robotic System For Load Transportation" (Abdelbaki Bouguerra, Henrik Andreasson, Achim J. Lilienthal) beschreibt eine Studie zur Weiterentwicklung selbstfahrender Transportsysteme. Hierfür ist ein Lager, an welches Papierrollen mittels Transportfahrzeuge und Züge geliefert werden, mit selbstfahrenden Transportfahrzeugen ausgestattet. Das selbstfahrende Transportfahrzeug weist hierbei eine Steuerung auf, mit welcher das Fahrzeug durch vordefinierte Wege steuerbar ist.

Die EP 0 995 557 A2 offenbart ein Fluid-Klammersystem zum Transport von Papierrollen. Es erfolgt eine automatisierte Greifdruckregulierung.

Der wissenschaftliche Artikel "MALTA: A System of Multiple Autonomous Trucks for Load Transportation" (A. Bouguerra, H. Andreasson, A. Lilienthal, B. Astrandt, T. Rögnvaldsson) offenbart eine automatisierte Überführungsanordnung gemäß dem Oberbegriff des Anspruchs 1.

Der Erfindung liegt die Aufgabe zugrunde, eine Überführungsanordnung bereitzustellen, die zum einen besonders wirtschaftlich ist und zum anderen nur einen geringen Platzbedarf bei dem Greifen des zu greifenden Guts hat. Ein besonders sicheres Greifen soll außerdem gegeben sein. Eine entsprechende Gesamtanlage und ein entsprechendes Güter-Überführungs-Verfahren sollen ebenfalls geschaffen werden.

Diese Aufgabe wird erfindungsgemäß durch die in den Hauptansprüchen 1, 15 und 17 angegebenen Merkmale gelöst. Der Kern der Erfindung liegt in einer Überführungsanordnung, die automatisiert bzw. fahrerlos arbeitet und eine Greifvorrichtung hat. Insbesondere sind die Greifarmvorrichtung und die Verfahreinrichtung automatisiert betreibbar.

Die Überführungsanordnung umfasst eine Güter-Erfassungsvorrichtung zum Erfassen des zu greifenden Guts. Die Güter-Erfassungsvorrichtung arbeitet vorzugsweise berührungslos. Sie ist vorzugsweise als optische Güter-Erfassungsvorrichtung ausgeführt.

Die Güter-Erfassungsvorrichtung weist eine (erste) Güter-Erfassungseinheit zum Erfassen von äußeren Abschnitten des zu greifenden Guts auf. Die (erste) Güter-Erfassungseinheit ist insbesondere im Stande, die tatsächliche Abmessung, insbesondere Querabmessung, insbesondere Durchmesser, des zu greifenden Guts zu erfassen. Sie ist vorzugsweise als Sensor oder Kamera ausgebildet.

Es ist von Vorteil, wenn die erste und/oder zweite Greifarmeinrichtung zum Greifen des zu greifenden Guts zumindest bereichsweise relativ zueinander verstellbar, insbesondere schwenkbar, ist.

Die Greifvorrichtung ist vorzugsweise insgesamt verdrehbar bzw. verschwenkbar.

Die Verfahreinrichtung umfasst günstigerweise mindestens eine Radanordnung, Kettenanordnung zur Abstützung gegenüber einem Untergrund bzw. Boden und/oder Verfahrantrieb oder dergleichen.

Die Steuereinheit ist bevorzugt elektrischer bzw. elektronischer Art. Sie steht mit der Greifvorrichtung in Signalverbindung.

Weitere bevorzugte Ausführungsformen der Erfindung sind in den Unteransprüchen angegeben.

Die Ausgestaltung gemäß dem Unteranspruch 2 erlaubt ein sicheres Aufnehmen des Guts in der Greifvorrichtung und Greifen derselben.

Die Ausgestaltung gemäß dem Unteranspruch 3 erlaubt ein sicheres Anfahren des Guts und damit ein sicheres Aufnehmen des Guts in der Greifvorrichtung sowie Greifen derselben.

Gemäß dem Unteranspruch 4 steuert die Steuereinheit die Greifvorrichtung in Abhängigkeit einer bekannten Abmessung, insbesondere Querabmessung, insbesondere Durchmessers, des zu greifenden Guts an. Die Abmessung, insbesondere Querabmessung, insbesondere Durchmesser, wird dazu beispielsweise von der Überführungsanordnung gemessen. Alternativ oder zusätzlich liest die Überführungsanordnung entsprechende Abmessungsinformationen bzw. Güterinformationen auf dem zugehörigen Gut ab. Diese Ausgestaltung erlaubt ein sicheres Aufnehmen des Guts in der Greifvorrichtung und Greifen derselben.

Gemäß dem Unteranspruch 5 steuert die Steuereinheit die Verfahreinrichtung in Abhängigkeit einer bekannten Abmessung, insbesondere Querabmessung, insbesondere Durchmessers, des zu greifenden Guts an. Die Abmessung, insbesondere Querabmessung, insbesondere Durchmesser, wird dazu beispielsweise von der Überführungsanordnung gemessen. Alternativ oder zusätzlich liest die Überführungsanordnung entsprechende Abmessungsinformationen bzw. Güterinformationen auf dem zugehörigen Gut ab. Diese Ausgestaltung erlaubt ein sicheres Aufnehmen des Guts in der Greifvorrichtung und Greifen derselben.

Die Überführungsanordnung ist vorzugsweise, insbesondere vollständig, automatisiert bzw. automatisch ansteuerbar bzw. positionierbar.

Die Ansteuerung der Greifvorrichtung, des Verfahrantriebs und/oder der Lenkung der Überführungsanordnung erfolgt bevorzugt in Abhängigkeit der jeweiligen Abmessung, insbesondere Querabmessung, insbesondere Durchmesser, des zu greifenden Guts. Es ist zweckmäßig, wenn die Abmessung, insbesondere Querabmessung, insbesondere Durchmesser, des zu greifenden Guts beispielsweise über eine Güter-Erfassungsvorrichtung und/oder über das auf diesem Gut angeordnete Etikett/Label bestimmbar ist.

In Abhängigkeit einer Abmessung, insbesondere Querabmessung, insbesondere Durchmessers, des gegriffenen Guts verschiebt sich vorzugsweise die Mittelachse des Guts gegenüber einem Nullpunkt bzw. Mittelebene der Greifvorrichtung. Die Mittelachse des Guts verschiebt sich dabei bevorzugt auf einer Kurve bzw. Funktion, die bei einem Anfahren des Guts entsprechend zu berücksichtigen ist.

Es ist von Vorteil, wenn bei einem eine kleine Abmessung, insbesondere Querabmessung, insbesondere Durchmesser, (zum Beispiel < 150 cm) aufweisenden, gegriffenen Gut ein seitlicher, insbesondere horizontaler, Versatz zwischen der Mittelebene der Greifvorrichtung und der die Mittelachse des Guts einschließenden Mittelebene des Guts vergleichsweise groß ist (x-Wert). Es ist zweckmäßig, wenn bei einem eine große Abmessung, insbesondere Querabmessung, insbesondere Durchmesser, aufweisenden, gegriffenen Gut (zum Beispiel ≥ 150 cm) der seitliche, insbesondere horizontale, Versatz zwischen der Mittelebene der Greifvorrichtung und der die Mittelachse des Guts einschließenden Mittelebene des Guts vergleichsweise klein ist (x-Wert). Je größer die Abmessung, insbesondere Querabmessung, insbesondere Durchmesser, des gegriffenen Guts ist, desto kleiner ist vorzugsweise der seitliche, insbesondere horizontale, Versatz zwischen der Mittelebene der Greifvorrichtung und der die Mittelachse des Guts einschließenden Mittelebene des Guts.

Es ist zweckmäßig, wenn gemäß dem Unteranspruch 7 die erste Greifarmeinrichtung im Bereich ihres freien Endes eine verschwenkbare erste Anlegebacke aufweist. Günstigerweise weist die zweite Greifarmeinrichtung im Bereich ihres freien Endes eine verschwenkbare zweite Anlegebacke auf. Die Anlegebacken sind günstigerweise frei schwenkbar. Sie sind bevorzugt unbetätigbar. Es ist zweckmäßig, wenn sie sich selbst nach dem zu greifenden Gut ausrichten.

Die Greifvorrichtung gemäß dem Unteranspruch 7 ist asymmetrisch und ermöglicht ein asymmetrisches Greifen eines Guts. Die Greifvorrichtung ist aufgrund der unterschiedlich langen Greifarmeinrichtungen beispielsweise im Stande, Güter vom Boden aufzuheben und/oder von einem Anlieferfahrzeug abzuladen, selbst wenn die Güter lückenlos bzw. in Kontakt zueinander in dem Anlieferfahrzeug angeordnet sind.

Vorzugsweise sind die Greifarmeinrichtungen unabhängig voneinander bzw. asymmetrisch betätigbar bzw. ansteuerbar.

Bevorzugt hat die erste Greifarmeinrichtung beim Greifen des Guts eine im Wesentlichen identische Stellung bzw. Auslenkung. Je kleiner der Durchmesser des gegriffenen Guts ist, desto weiter ist bevorzugt die zweite Greifarmeinrichtung in Richtung auf die erste Greifarmeinrichtung bzw. die Mittelebene der Greifvorrichtung verschwenkt. Je kleiner die Abmessung, insbesondere Querabmessung, insbesondere Durchmesser, des gegriffenen Guts ist, desto weiter ist vorzugsweise das gegriffene Gut von der Referenzebene bzw. von Anlenkstellen der Greifarmeinrichtungen an einem Tragkörper entfernt gehalten.

Die Güter-Erfassungsanordnung weist vorzugsweise eine zweite Güter-Erfassungseinheit zum Erfassen eines Identifikationslabels auf dem Gut auf. Die zweite Güter-Erfassungseinheit ist insbesondere im Stande, ein Identifikationslabel auf dem zu greifenden Gut zu erfassen bzw. zu lesen, das bevorzugt einen Barcode enthält und der eindeutigen Identifikation des Guts dient. Sie ist vorzugsweise als Sensor oder Kamera ausgeführt.

Es ist zweckmäßig, wenn ein Vergleich zwischen der durch die erste Güter-Erfassungseinheit tatsächlich erfassten Abmessung, insbesondere Querabmessung, insbesondere Durchmesser, des zu greifenden Guts und einem bekannten Wert aus einer Datenbank und/oder dem auf dem Identifizierungslabel angegebenen Wert über die eindeutige Identifikation des zu greifenden Guts, beispielsweise mittels der zweiten Güter-Erfassungseinheit, erfolgt.

Die Güter-Mittelachsen-Istposition des zu greifenden Guts ist insbesondere mittels der ersten und/oder zweiten Güter-Erfassungseinheit bestimmbar.

Der Verfahrantrieb gemäß dem Unteranspruch 10 ist vorzugsweise als Elektroantrieb ausgeführt.

Es ist von Vorteil, wenn die Überführungsanordnung eine erste Navigationseinrichtung zum Navigieren der Überführungsanordnung und eine sich von der ersten Navigationseinrichtung unterscheidende zweite Navigationseinrichtung zum Navigieren der Überführungsanordnung umfasst. Diese Überführungsanordnung ist besonders schnell und zuverlässig navigierbar.

Günstigerweise weist die zweite Navigationseinrichtung eine höhere Positions-Genauigkeit als die erste Navigationseinrichtung auf. Die Navigationseinrichtungen unterscheiden sich in ihrer Positions- bzw. Standort-Genauigkeit. Die erste Navigationseinrichtung dient insbesondere zur Grobnavigation und hat beispielsweise eine Positions-Genauigkeit zwischen 1 cm und 20 cm, bevorzugt zwischen 1,5 cm und 10 cm, bevorzugt von 5 cm, bevorzugt von 2 cm, während die zweite Navigationseinrichtung insbesondere zur Feinnavigation dient und beispielsweise eine Positions-Genauigkeit zwischen 0,1 cm und 3 cm, bevorzugt zwischen 0,15 cm und 2 cm, bevorzugt von 1 cm, bevorzugt von 0,2 cm, aufweist. Die erste Navigationseinrichtung erlaubt vorzugsweise auch eine Ortung der Überführungsanordnung.

Es ist zweckmäßig, wenn die erste Navigationseinrichtung bei einem Verfahren der Überführungsanordnung, insbesondere bis Identifizierung eines zu greifenden Guts, insbesondere stets, aktiv ist. Die erste Navigationseinrichtung ist, insbesondere stets, bei einem Verfahren der Überführungsanordnung aktiv. Dies gilt bevorzugt sowohl für einen automatisierten fahrerlosen Betrieb der Überführungsanordnung als auch für einen manuellen Betrieb der Überführungsanordnung.

Die zweite Navigationseinrichtung ist bevorzugt nach Identifizierung eines zu greifenden Guts aktiv. Die Überführungsanordnung ist besonders effizient. Die zweite Navigationseinrichtung ist zum Beispiel in einem Nahbereich des greifenden Guts aktiv.

Es ist von Vorteil, wenn die erste Navigationseinrichtung den Navigationssensor nutzt und vorzugsweise mindestens ein 2D-Lidarsystem umfasst.

Die zweite Navigationseinrichtung nutzt bevorzugt eine Güter-Identifizierungsvorrichtung und ist vorzugsweise als 3D-Güter-Identifizierungssystem ausgeführt. Die Güter-Identifizierungsvorrichtung arbeitet bevorzugt berührungslos und ist vorzugsweise als Sensor oder Kamera ausgeführt. Sie ist insbesondere imstande, die zu überführende Materialrolle zu identifizieren. Die Güter-Identifizierungsvorrichtung ist beispielsweise als Objekt- bzw. Güter-Erkennungsvorrichtung und/oder Güter-Erfassungsvorrichtung ausgebildet. Ein Arbeitsbereich der Güter-Identifizierungsvorrichtung liegt vorzugsweise zwischen 20 cm und 10 m, bevorzugt zwischen 30 cm und 8 m.

Es ist zweckmäßig, wenn die Güter über ihre Positionskoordinaten identifizierbar sind.

Insbesondere kennt gemäß dem Unteranspruch 16 die übergeordnete Steuerung die Positionen aller mittels der mindestens einen Überführungsanordnung überführten Güter anhand von (Positions)Informationen von der ersten und/oder zweiten Navigationseinrichtung.

Es ist zweckmäßig, wenn eine Position und/oder Orientierung der Überführungsanordnung unabhängig von deren Betriebsart ständig von dem Navigationssensor und einer übergeordneten Steuerung erfasst wird.

Es ist von Vorteil, wenn bei der Gesamtanlage eine Güter-Identifizierung bei manuellem und automatisiertem Betrieb der mindestens einen Überführungsanordnung erfolgt und eine Ortung der mindestens einen Überführungsanordnung, bevorzugt durch einen Navigationssensor, zumindest zeitweise, bevorzugt ständig, erfolgt, was eine zumindest zeitweise, bevorzugt ständige, Aktualisierung von Güter-Positionsdaten in einer Datenbank erlaubt.

Die Unteransprüche 2 bis 14 bilden bevorzugte Weiterbildungen des Güter-Überführungs-Verfahrens gemäß dem Hauptanspruch 17.

Die Überführungsanordnung ist beispielsweise in einem Güterlager einsetzbar, das eine ungleichmäßige bzw. asymmetrische Anordnung einzelner Reihen mit Gütern unter Bildung eines Personen-Fluchtwegs aufweist. Über den Personen-Fluchtweg sind Personen bei Gefahr im Stande, aus dem Güterlager zu flüchten bzw. sich von den Gütern/Reihen zu entfernen. Gefährdungen durch Güter anliefernde, insbesondere automatisierte, Überführungsanordnungen bzw. durch angelieferte Güter sind so sicher vermeidbar.

Es ist zweckmäßig, wenn der minimale Abstand zwischen den in der ersten Reihe angeordneten Gütern und den in der zweiten Reihe angeordneten Gütern bei deren einander zugewandten (Umfangs)Abschnitten im Wesentlichen konstant ist. Günstigerweise ist der minimale Abstand zwischen den in der zweiten Reihe angeordneten Gütern und den in der dritten Reihe angeordneten Gütern bei deren einander zugewandten (Umfangs)Abschnitten im Wesentlichen konstant. Es ist von Vorteil, wenn sich der minimale Abstand zwischen den in der ersten Reihe angeordneten Gütern und den in der zweiten Reihe angeordneten Gütern von dem minimalen Abstand zwischen den in der zweiten Reihe angeordneten Gütern und den in der dritten Reihe angeordneten Gütern bei deren einander zugewandten (Umfangs)Abschnitten wesentlich unter Bildung des Personen-Fluchtwegs unterscheidet.

Günstigerweise sind die Güter als Materialrollen, insbesondere Papierrollen bzw. Papperollen, ausgeführt und in einer Wellpappeanlage zur Bildung von Wellpappe einsetzbar. Alternativ sind die Güter beispielsweise Paletten oder auf Paletten angeordnet. Sie sind zum Beispiel alternativ als Gitterboxen ausgeführt.

Die Güter bzw. Materialrollen können sich voneinander unterscheiden, beispielsweise in Querabmessung bzw. Durchmesser, axialer Erstreckung, Material oder dergleichen. Die Quererstreckung bzw. der Durchmesser der Güter bzw. Materialrollen in dem Lager liegt vorzugsweise zwischen 30 cm und 250 cm, bevorzugt zwischen 100 cm und 200 cm. Die axiale Erstreckung liegt günstigerweise zwischen 60 cm und 350 cm.

Der minimale Abstand zwischen den in der ersten Reihe angeordneten Gütern und den in der zweiten Reihe angeordneten Gütern bei deren einander zugewandten (Umfangs)Abschnitten ist größer als der minimale Abstand zwischen den in der zweiten Reihe angeordneten Gütern und den in der dritten Reihe angeordneten Gütern bei deren einander zugewandten (Umfangs)Abschnitten.

Es ist von Vorteil, wenn der minimale Abstand zwischen den in der ersten Reihe angeordneten Gütern und den in der zweiten Reihe angeordneten Gütern bei deren einander zugewandten (Umfangs)Abschnitten um mindestens 50 %, bevorzugt um mindestens 100 %, bevorzugt um mindestens 150 %, größer als der minimale Abstand zwischen den in der zweiten Reihe angeordneten Gütern und den in der dritten Reihe angeordneten Gütern bei deren einander zugewandten (Umfangs)Abschnitten ist. Es ist zweckmäßig, wenn der minimale Abstand zwischen den in der ersten Reihe angeordneten Gütern und den in der zweiten Reihe angeordneten Gütern bei deren einander zugewandten (Umfangs)Abschnitten höchstens um 300 %, bevorzugt höchstens um 250 %, größer als der minimale Abstand zwischen den in der zweiten Reihe angeordneten Gütern und den in der dritten Reihe angeordneten Gütern bei deren einander zugewandten (Umfangs)Abschnitten ist. Wesentlich ist zum einen, dass der minimale Abstand zwischen den in der ersten Reihe angeordneten Gütern und den in der zweiten Reihe angeordneten Gütern ausreichend ist, um einen Personen-Fluchtweg zu bilden bzw. Personen eine Flucht zwischen den in der ersten Reihe angeordneten Gütern und den in der zweiten Reihe angeordneten Gütern zu ermöglichen. Wesentlich ist zum anderen, dass der minimale Abstand zwischen den in der zweiten Reihe angeordneten Gütern und den in der dritten Reihe angeordneten Gütern ausreichend ist, um ein Einfahren der Überführungsanordnung zwischen den in der zweiten Reihe angeordneten Gütern und den in der dritten Reihe angeordneten Gütern bzw. ein Greifen der, insbesondere in der zweiten Reihe und/oder den in der dritten Reihe angeordneten, Güter zu ermöglichen.

Die Überführungsanordnung ist auch besonders gut bei der Entladung angelieferter Güter einsetzbar.

Es ist zweckmäßig, wenn eine Überführungsanordnung eine eigene Kommunikationseinrichtung mit einer Empfangseinheit zum Empfangen externer Informationen bzw. Signale, die beispielsweise Fahrt-, Ziel- und/oder Umgebungsinformationen sind, hat.

Günstigerweise hat die mindestens eine Überführungsanordnung mindestens einen eigenen Verfahrantrieb zum, insbesondere direkten oder indirekten, Antreiben von mindestens einer antreibbaren Laufeinheit desselben. Die mindestens eine Überführungsanordnung ist vorzugsweise eigenständig ansteuerbar. Sie ist insbesondere selbstfahrend. Sie fährt vorzugsweise schienenlos.

Es ist zweckmäßig, wenn die Überführungsanordnung eine eigene Energiespeichereinheit umfasst, die beispielsweise als Batterie oder Akkumulator ausgeführt ist. Die Überführungsanordnung ist vorzugsweise lenkbar. Sie ist bevorzugt im Stande, geradeaus oder Kurven zu fahren.

Die in den Ansprüchen verwendeten unbestimmten Artikel bilden keine mengenmäßige Beschränkung.

Nachfolgend wird unter Bezugnahme auf die beigefügte Zeichnung eine bevorzugte Ausführungsform der Erfindung beispielhaft beschrieben. Dabei zeigen:
- Fig. 1: eine vereinfachte Draufsicht auf eine erfindungsgemäße Gesamtanlage,
- Fig. 2: eine Seitenansicht eines Anliefersystems mit einem Anlieferfahrzeug und einer erfindungsgemäßen automatisierten Überführungsanordnung der in Fig. 1 gezeigten Gesamtanlage,
- Fig. 3: eine perspektivische Darstellung des in Fig. 2 gezeigten Anliefersystems,
- Fig. 4: eine Draufsicht auf ein alternatives Anliefersystem, bei dem aktive Sicherheitseinrichtungen der erfindungsgemäßen Überführungsanordnung mit dargestellt sind,
- Fig. 5: eine der Fig. 4 ähnelnde Draufsicht auf das in Fig. 2, 3 gezeigte Anliefersystem, bei dem eine Materialrollen-Objekt-Erkennungsvorrichtung der erfindungsgemäßen Überführungsanordnung in aktivem Zustand gezeigt ist,
- Fig. 6: eine detaillierte perspektivische Ansicht einer erfindungsgemäßen Überführungsanordnung von schräg unten,
- Fig. 7: eine detaillierte perspektivische Ansicht der in Fig. 6 gezeigten erfindungsgemäßen Überführungsanordnung von schräg oben,
- Fig. 8A: einen Querschnitt durch eine Greifvorrichtung der in Fig. 6, 7 veranschaulichten erfindungsgemäßen Überführungsanordnung samt zu überführender Materialrolle und Materialrollen-Erfassungsvorrichtung sowie Steuerung,
- Fig. 8B-8D: Fig. 8A entsprechende Ansichten, die eine Positionsberechnung der Greifvorrichtung veranschaulichen,
- Fig. 9: eine vereinfachte Seitenansicht einer Überführungsanordnung gemäß Fig. 7, 8A zur Veranschaulichung einer Hubvorrichtung,

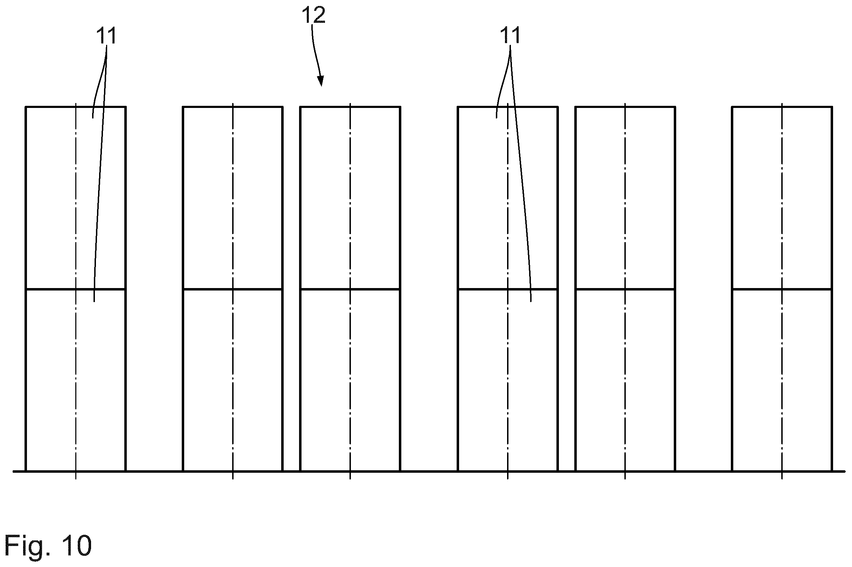

- Fig. 10: eine ein Materialrollenlager der Gesamtanlage gemäß Fig. 1 von vorne zeigende Ansicht,
- Fig. 11: eine Draufsicht auf das in Fig. 10 gezeigte Materialrollenlager,
- Fig. 12: eine perspektivische Ansicht des in Fig. 10, 11 gezeigten Materialrollenlagers,
- Fig. 13: eine Draufsicht auf ein Übergabesystem zum Übergeben einer Materialrolle an eine Überführungsanordnung der in Fig. 1 gezeigten Gesamtanlage,
- Fig. 14: eine Seitenansicht des in Fig. 13 gezeigten Übergabesystems,
- Fig. 15: einen Schnitt durch eine aktive Entlastungsvorrichtung des in Fig. 13, 14 gezeigten Übergabesystems,
- Fig. 16: ein Ablaufdiagramm, das eine Navigation einer in den Figuren dargestellten Überführungsanordnung veranschaulicht,
- Fig. 17: eine Ansicht, die die Steuerung der Gesamtanlage veranschaulicht, und
- Fig. 18: ein Ablaufdiagramm, das ein Absetzten eines Guts mittels einer Überführungsanordnung veranschaulicht.

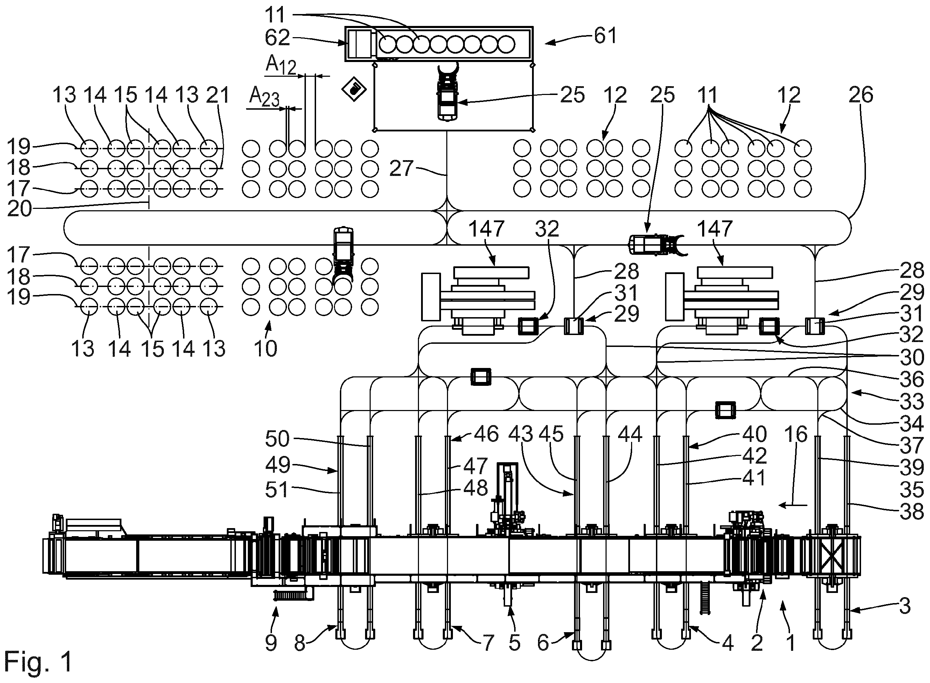

Eine in Fig. 1 gezeigte Gesamtanlage umfasst eine Wellpappeanlage 1, die sich gemäß dieser bevorzugten Ausführungsform im Wesentlichen geradlinig erstreckt.

Die Wellpappeanlage 1 weist eine erste Wellpappe-Herstellvorrichtung 2 zum Herstellen einer einseitig kaschierten ersten Wellpappebahn auf.

Der ersten Wellpappe-Herstellvorrichtung 2 sind eine erste Deckbahn-Spleißvorrichtung 3 und eine erste Zwischenbahn-Spleißvorrichtung 4 vorgeordnet. Die erste Deckbahn-Spleißvorrichtung 3 umfasst zum Abrollen einer endlichen ersten Deckbahn von einer ersten Deckbahnrolle eine erste Abrolleinheit und zum Abrollen einer endlichen zweiten Deckbahn von einer zweiten Deckbahnrolle eine zweite Abrolleinheit. Die endliche erste Deckbahn und zweite Deckbahn werden zum Bereitstellen einer endlosen ersten Deckbahn mittels einer Verbinde- und Schneideinheit der ersten Deckbahn-Spleißvorrichtung 3 miteinander verbunden.

Die erste Zwischenbahn-Spleißvorrichtung 4 ist entsprechend der ersten Deckbahn-Spleißvorrichtung 3 ausgebildet. Diese umfasst zum Abrollen einer endlichen ersten Zwischenbahn von einer ersten Zwischenbahnrolle eine dritte Abrolleinheit und zum Abrollen einer endlichen zweiten Zwischenbahn von einer zweiten Zwischenbahnrolle eine vierte Abrolleinheit. Die endliche erste Zwischenbahn und zweite Zwischenbahn werden zum Bereitstellen einer endlosen ersten Zwischenbahn mittels einer Verbinde- und Schneideinheit der ersten Zwischenbahn-Spleißvorrichtung 4 miteinander verbunden.

Die endlose erste Deckbahn und die endlose erste Zwischenbahn werden der ersten Wellpappe-Herstellvorrichtung 2 zugeführt.

Die erste Wellpappe-Herstellvorrichtung 2 umfasst zum Erzeugen einer eine Wellung aufweisenden, endlosen ersten Wellpappebahn aus der endlosen ersten Zwischenbahn eine erste Riffelwalzenanordnung mit einer ersten Riffelwalze und einer zweiten Riffelwalze. Die Riffelwalzen bilden zum Durchführen und Riffeln der endlosen ersten Zwischenbahn einen ersten Walzenspalt aus.

Zum Verbinden der endlosen ersten Deckbahn mit der endlosen gewellten ersten Zwischenbahn bzw. Wellbahn zu der einseitig kaschierten endlosen ersten Wellpappebahn weist die erste Wellpappe-Herstellvorrichtung 2 eine erste Leimauftragseinrichtung auf, die vorzugsweise eine Leimdosierwalze, einen Leimbehälter und eine Leimauftragswalze umfasst. Zum Durchführen und Beleimen der endlosen ersten Wellbahn bildet die Leimauftragswalze mit der ersten Riffelwalze einen Spalt aus. Der sich in dem Leimbehälter befindende Leim wird über die Leimauftragswalze auf Spitzen der Wellung der endlosen ersten Wellbahn aufgetragen. Die Leimdosierwalze liegt gegen die Leimauftragswalze an und dient zum Ausbilden einer gleichmäßigen Leimschicht auf der Leimauftragswalze.

Die endlose erste Deckbahn wird anschließend mit der mit Leim aus dem Leimbehälter versehenen, endlosen ersten Wellbahn in der ersten Wellpappe-Herstellvorrichtung 2 zum Herstellen der einseitig kaschierten ersten Wellpappebahn zusammengefügt.

Zum Anpressen der endlosen ersten Deckbahn gegen die mit Leim versehene, endlose erste Wellbahn, die wiederum bereichsweise an der ersten Riffelwalze anliegt, hat die erste Wellpappe-Herstellvorrichtung 2 ein erstes Anpressmodul. Das erste Anpressmodul ist günstigerweise als Anpressbandmodul ausgeführt. Es ist oberhalb der ersten Riffelwalze angeordnet. Das erste Anpressmodul hat zwei erste Umlenkwalzen sowie ein endloses erstes Anpressband, das um die beiden ersten Umlenkwalzen geführt ist.

Die erste Riffelwalze greift in einen Raum zwischen den beiden ersten Umlenkwalzen des ersten Anpressmoduls bereichsweise von unten ein, wodurch das erste Anpressband durch die erste Riffelwalze umgelenkt wird. Das erste Anpressband drückt gegen die endlose erste Deckbahn, die wiederum gegen die mit Leim versehene, an der ersten Riffelwalze anliegende, endlose erste Wellbahn gepresst wird.

Zum Zwischenspeichern und Puffern der einseitig kaschierten, endlosen ersten Wellpappebahn wird diese über eine erste Hochtransporteinrichtung einer ersten Speichervorrichtung zugeführt, wo diese Schleifen ausbildet.

Ferner hat die Wellpappeanlage 1 eine zweite Wellpappe-Herstellvorrichtung 5, die entsprechend der ersten Wellpappe-Herstellvorrichtung 2 ausgebildet ist.

Der zweiten Wellpappe-Herstellvorrichtung 5 sind eine zweite Deckbahn-Spleißvorrichtung 6 und eine zweite Zwischenbahn-Spleißvorrichtung 7 vorgeordnet, die entsprechend der ersten Deckbahn-Spleißvorrichtung 3 bzw. der ersten Zwischenbahn-Spleißvorrichtung 4 ausgebildet sind.

Die zweite Deckbahn-Spleißvorrichtung 6 umfasst zum Abrollen einer endlichen dritten Deckbahn von einer dritten Deckbahnrolle eine fünfte Abrolleinheit und zum Abrollen einer endlichen vierten Deckbahn von einer vierten Deckbahnrolle eine sechste Abrolleinheit. Die endliche dritte Deckbahn und die vierte Deckbahn werden zum Bereitstellen einer endlosen zweiten Deckbahn mittels einer Verbinde- und Schneideinheit der zweiten Deckbahn- Spleißvorrichtung 6 miteinander verbunden.

Die zweite Zwischenbahn-Spleißvorrichtung 7 umfasst zum Abrollen einer endlichen dritten Zwischenbahn von einer dritten Zwischenbahnrolle eine siebte Abrolleinheit und zum Abrollen einer endlichen vierten Zwischenbahn von einer vierten Zwischenbahnrolle eine achte Abrolleinheit. Die endliche dritte Zwischenbahn und vierte Zwischenbahn werden zum Bereitstellen einer endlosen zweiten Zwischenbahn mittels einer Verbinde- und Schneideinheit der zweiten Zwischenbahn-Spleißvorrichtung 7 miteinander verbunden.

Die zweite Wellpappe-Herstellvorrichtung 5 ist im Stande, eine einseitig kaschierte, endlose, zweite Wellpappebahn aus der endlosen zweiten Deckbahn und Zwischenbahn zu erzeugen.

Die einseitig kaschierte, zweite Wellpappebahn wird einer zweiten Speichervorrichtung zugeführt, wo diese Schleifen ausbildet.

Die Wellpappeanlage 1 hat außerdem eine Kaschierbahn-Spleißvorrichtung 8, die zum Abrollen einer endlichen ersten Kaschierbahn von einer ersten Kaschierbahnrolle eine neunte Abrolleinheit und zum Abrollen einer endlichen zweiten Kaschierbahn von einer zweiten Kaschierbahnrolle eine zehnte Abrolleinheit umfasst. Die endliche erste Kaschierbahn und die endliche zweite Kaschierbahn werden zum Bereitstellen einer endlosen Kaschierbahn mittels einer Verbinde- und Schneideinheit der Kaschierbahn-Spleißvorrichtung 8 miteinander verbunden.

Stromabwärts zu den Speichervorrichtungen und der Kaschierbahn-Spließvorrichtung 8 hat die Wellpappeanlage 1 eine Vorheizvorrichtung (nicht dargestellt), die drei übereinander angeordnete Vorheizwalzen umfasst. Den Vorheizwalzen werden die einseitig kaschierten, endlosen Wellpappebahnen und die endlose Kaschierbahn zugeführt.

Stromabwärts zu der Vorheizvorrichtung hat die Wellpappanlage 1 ein Leimwerk (nicht dargestellt) mit Beleimungswalzen, die teilweise in ein jeweiliges Leimbad eingetaucht sind. An jeder Beleimungswalze liegt eine Leimdosierwalze an, um eine gleichmäßige Leimschicht auf der benachbarten Beleimungswalze auszubilden. Die einseitig kaschierte, erste Wellpappebahn befindet sich mit ihrer Wellbahn mit einer ersten Beleimungswalze in Kontakt, sodass die Wellung dieser Wellbahn mit Leim aus dem Leimbad versehen wird. Die einseitig kaschierte, zweite Wellpappebahn befindet sich mit ihrer Wellbahn mit einer zweiten Beleimungswalze in Kontakt, sodass die Wellung dieser Wellbahn mit Leim aus dem zugehörigen Leimbad versehen wird.

Stromabwärts zu dem Leimwerk hat die Wellpappeanlage 1 eine Verbindungsvorrichtung 9, die als Heiz-Andrückvorrichtung ausgebildet ist und einen horizontal verlaufenden Heiztisch umfasst. Benachbart zu dem Heiztisch ist ein um Führungswalzen geführter, endloser Andrückgurt angeordnet. Zwischen dem Andrückgurt und dem Heiztisch ist ein Andrückspalt ausgebildet, durch den die einseitig kaschierten Wellpappebahnen und die endlose Kaschierbahn unter Bildung einer endlosen, hier fünflagigen, Wellpappebahn geführt sind.

Stromabwärts zu der Verbindungsvorrichtung 9 hat die Wellpappeanlage 1 eine Kurz-Querschneidevorrichtung (nicht dargestellt).

Stromabwärts zu der Kurz-Querschneidevorrichtung umfasst die Wellpappeanlage 1 eine Längsschneide-/Rillvorrichtung (nicht dargestellt).

Stromabwärts zu der Längsschneide-/Rillvorrichtung hat die Wellpappeanlage 1 eine Querschneidevorrichtung (nicht dargestellt), um aus der endlosen Wellpappebahn bzw. aus Teilbahnen derselben Bögen zu erzeugen.

Der Querschneidevorrichtung ist eine Förderbandeinrichtung (nicht dargestellt) nachgeordnet, um die Bögen weiter zu fördern. Der Förderbandeinrichtung ist eine Ablagevorrichtung (nicht dargestellt) nachgeordnet, um Bögen-Stapel zu bilden.

Beabstandet zu der Wellpappeanlage 1 hat die Gesamtanlage ein Materialrollenlager 10, in dem sich eine Vielzahl von Materialrollen 11 befindet. Die Materialrollen 11 sind in den Spleißvorrichtungen 3, 4, 6, 7, 8 einsetzbar. Sie sind in dem Materialrollenlager 10 zu Gruppen 12 zusammengefasst, die beabstandet zueinander angeordnet sind. Die Materialrollen 11 sind in den einzelnen Gruppen 12 beispielsweise identisch angeordnet.

Die Materialrollen 11 sind stehend in dem Materialrollenlager 10 angeordnet. Sie stützen sich dabei stirnseitig gegenüber einem Untergrund bzw. Boden ab, der beispielsweise ein Hallenboden ist und auch die Wellpappeanlage 1 trägt.

Jede Gruppe 12 hat eine erste Reihe 13 mit Materialrollen 11. Benachbart zu der ersten Reihe 13 erstreckt sich in jeder Gruppe 12 eine zweite Reihe 14 mit Materialrollen 11. Benachbart zu der zweiten Reihe 14 erstreckt sich in jeder Gruppe 12 eine dritte Reihe 15 mit Materialrollen 11. In jeder Reihe 13, 14, 15 befinden sich bei vollständig bestücktem Materialrollenlager 10 vorzugsweise gleich viele Materialrollen 11.

Bei dieser bevorzugten, gezeigten Ausführungsform sind pro Reihe 13, 14, 15 drei Materialrollen 11 vorhanden. Eine andere Anzahl von Materialrollen 11 pro Reihe 13, 14, 15 ist alternativ möglich. Alternativ unterscheidet sich die Anzahl der Materialrollen 11 pro Reihe 13, 14, 15.

Die Reihen 13, 14, 15 mit Materialrollen 11 verlaufen parallel zueinander. Sie erstrecken sich senkrecht zu einer Längs- bzw. Förderrichtung 16 der Wellpappeanlage 1. In jeder Reihe 13, 14, 15 befinden sich somit Mittel- bzw. Längsachsen der dort angeordneten Materialrollen 11 in einer gemeinsamen vertikalen Längsebene. Die vertikalen Längsebenen der Reihen 13, 14, 15 verlaufen parallel zueinander und erstrecken sich senkrecht zu der Wellpappeanlage 1.

Die in den unterschiedlichen Reihen 13, 14, 15 angeordneten Materialrollen 11 befinden sich in unterschiedlichen vertikalen, parallel zueinander verlaufenden Querebenen 17, 18, 19, die die einzelnen Mittel- bzw. Längsachsen der in der jeweiligen Reihe 13, 14 ,15 bzw. angeordneten Materialrollen 11 einschließen und senkrecht zu den Längsebenen verlaufen.

Der horizontale Abstand der in einer Reihe 13, 14, 15 angeordneten Materialrollen 11 zueinander ist identisch. Alternativ berühren sich die in einer Reihe 13, 14, 15 angeordneten Materialrollen 11.

Die in der ersten Reihe 13 angeordneten Materialrollen 11 haben zu den in der benachbarten zweiten Reihe 14 angeordneten Materialrollen 11 einen minimalen ersten Abstand A₁₂ zwischen maximalen Durchmesserbereichen benachbart zueinander angeordneter Materialrollen 11. Der minimale Abstand A₁₂ liegt somit zwischen Außenseiten bzw. Umfangsbereichen von Materialrollen 11 in der ersten und zweiten Reihe 13, 14 vor. Eine erste Begrenzungslinie des minimalen Abstands A₁₂ ist durch eine erste Tangente der in der ersten Reihe 13 angeordneten Materialrollen 11 gebildet. Eine zweite Begrenzungslinie des minimalen Abstands A₁₂ ist durch eine zweite Tangente der in der zweiten Reihe 14 angeordneten Materialrollen 11 gebildet.

Die in der zweiten Reihe 14 angeordneten Materialrollen 11 haben zu den in der benachbarten dritten Reihe 15 angeordneten Materialrollen 11 einen minimalen zweiten Abstand A₂₃ zwischen maximalen Durchmesserbereichen benachbart zueinander angeordneter Materialrollen 11. Der minimale Abstand A₂₃ liegt somit zwischen Außenseiten bzw. Umfangsbereichen von Materialrollen 11 in der zweiten und dritten Reihe 14, 15 vor. Eine erste Begrenzungslinie des minimalen Abstands A₂₃ ist durch eine erste Tangente der in der zweiten Reihe 14 angeordneten Materialrollen 11 gebildet. Eine zweite Begrenzungslinie des minimalen Abstands A₂₃ ist durch eine zweite Tangente der in der dritten Reihe 15 angeordneten Materialrollen 11 gebildet.

Die minimalen Abstände A₁₂ und A₂₃ unterscheiden sich deutlich voneinander. Der minimale Abstand A₁₂ ist wesentlich größer als der minimale Abstand A₂₃. Der minimale Abstand A₁₂ beträgt gemäß dieser Ausführungsform 87,5 cm. Er liegt vorzugsweise zwischen 50 cm und 90 cm und ermöglicht insbesondere einer Person die Flucht. Der minimale Abstand A₂₃ liegt vorzugsweise zwischen 0 cm und 30 cm. Er ist günstigerweise so klein wie möglich, also 0 cm, um die Fläche des Materialrollenlagers 10 optimal zu nutzen. Der minimale Abstand A₂₃ ist also insbesondere abhängig von einer geometrischen Ausführung einer Überführungsanordnung zum Überführen der Materialrollen 11, deren Greifvorrichtung bzw. deren ersten Greifarmeinrichtung und/oder zweiten Greifarmeinrichtung. Die Greifvorrichtung muss insbesondere imstande sein, die Materialrolle/n 11 sicher aufzunehmen. Beispielsweise ist eine Breite eines Rahmens der Überführungsanordnung (Überstand) zu berücksichtigen, damit die zu greifende/n Materialrolle/n 11 sicher erreichbar ist/sind.

Die Materialrollen 11 von jeder Gruppe 12 sind bezüglich einer ersten Symmetrieebene 20 symmetrisch angeordnet, die sich parallel zu den Reihen 13, 14, 15 erstreckt. Sie erstreckt sich zwischen zwei dritten Reihen 15, die dort benachbart zueinander angeordnet sind.

Ferner sind die Materialrollen 11 von jeder Gruppe 12 symmetrisch zu einer zweiten Symmetrieebene 21 angeordnet, die sich senkrecht zu der ersten Symmetrieebene 20 in der mittleren Querebene 18 erstreckt.

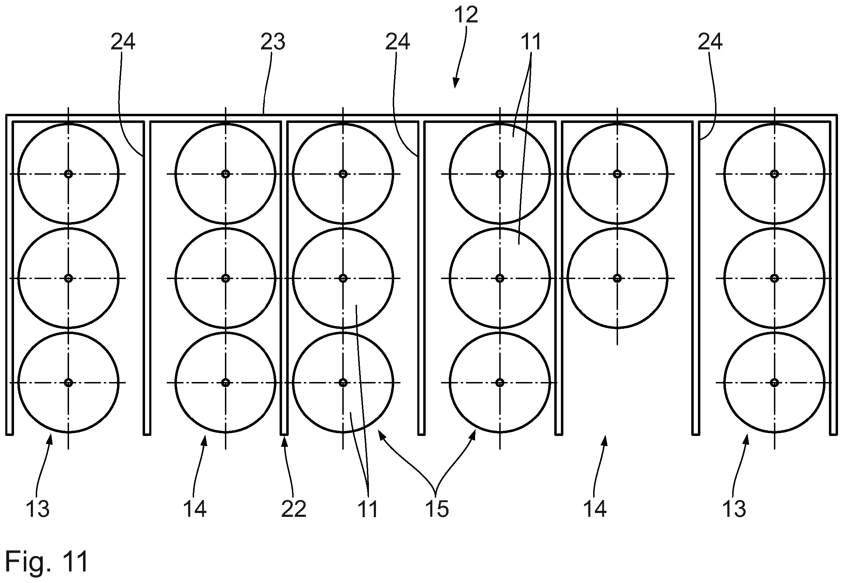

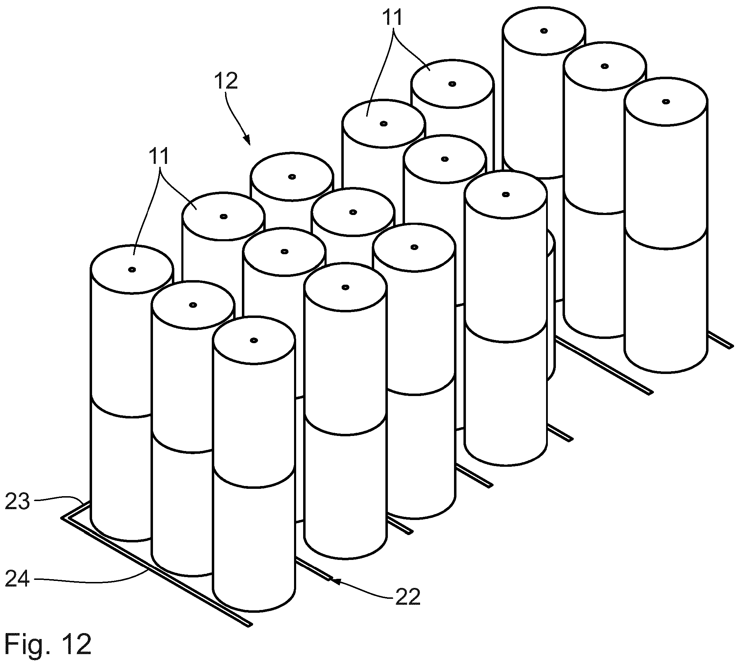

Wie Fig. 11, 12 zeigen, ist jede Reihe 13, 14, 15 innerhalb einer bodenseitigen Markierung 22 angeordnet, die eine Markierungs-Basis 23 und von der Markierungs-Basis 23 vorspringende Markierungs-Unterteilungsschenkel 24 hat. Die Markierungs-Basen 23 fluchten miteinander. Die Markierungs-Unterteilungsschenkel 24 verlaufen parallel zueinander und senkrecht zu der Markierungs-Basis 23. Sie haben eine identische Länge ausgehend von der Markierungs-Basis 23.

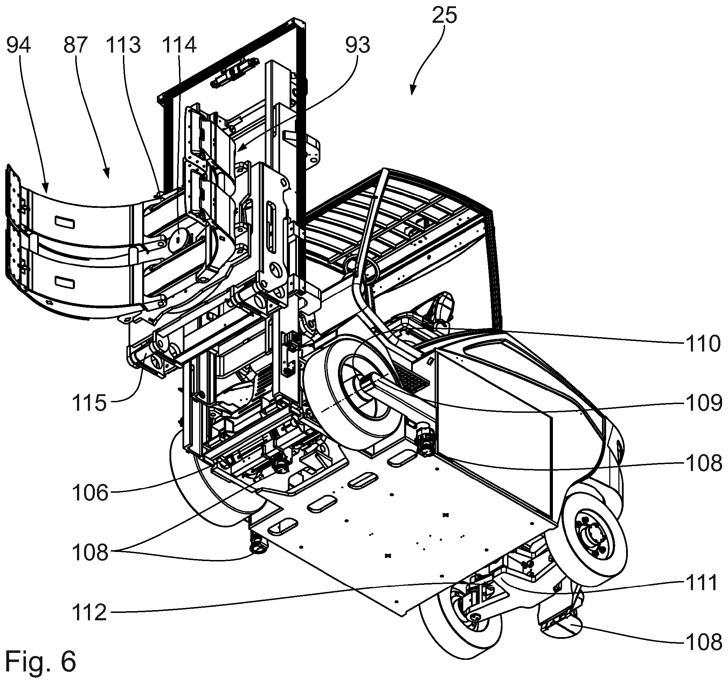

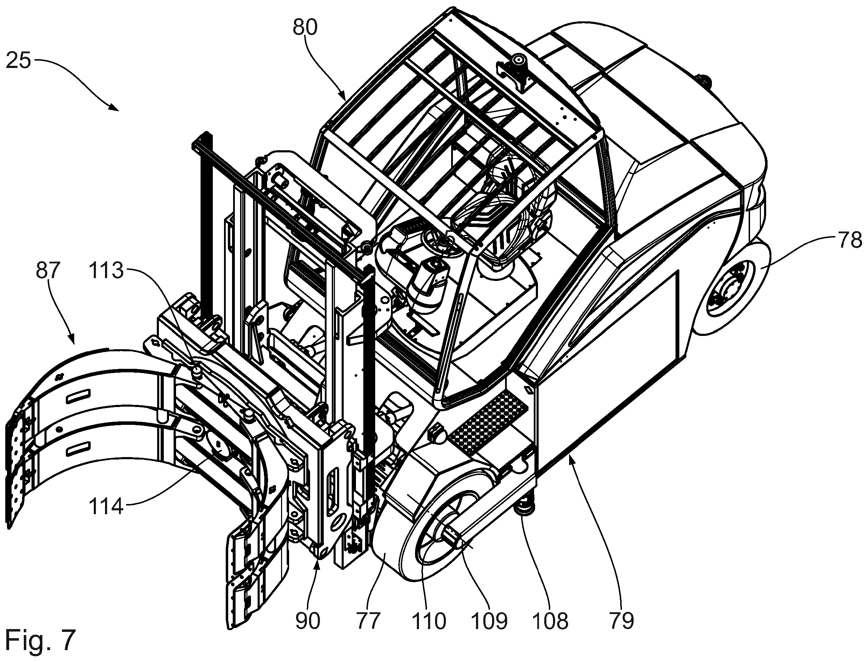

Die Materialrollen 11 sind über automatisierte bzw. fahrerlose Überführungsanordnungen 25 aus dem Materialrollenlager 10 entfernbar (siehe beispielsweise Fig. 6 bis 9).

Wie Fig. 1 zeigt, ist ein geschlossener Überführungsanordnungs-Umlaufweg 26 vorhanden, der sich entlang der einander gegenüberliegenden ersten Querebenen 17 der jeweiligen Gruppen 12 erstreckt. Der Überführungsanordnungs-Umlaufweg 26 umfasst zwei nebeneinander angeordnete, endlose Teil-Umlaufwege. Er ist an einen Überführungsanordnungs-Hauptweg 27 angeschlossen, der sich senkrecht zu der Längs- bzw. Förderrichtung 16 der Wellpappeanlage 1 zwischen einzelnen Gruppen 12 erstreckt und zwischen den Teil-Umlaufwegen verläuft. Alternativ ist anstelle eines Überführungsanordnungs-Umlaufwegs 26 ein Überführungsanordnungs-Weg 26 vorhanden, der in gegensinnigen Richtungen befahrbar ist.

An den Überführungsanordnungs-Umlaufweg 16 schließen sich an einer der Wellpappeanlage 1 zugewandten Seite zwei Überführungsanordnungs-Querwege 28 an, die sich senkrecht zu der Längs- bzw. Förderrichtung 16 der Wellpappeanlage 1 erstrecken. Jeder Überführungsanordnungs-Querweg 28 steht mit einem Übergabesystem 29 in Verbindung (Fig. 1).

Der Überführungsanordnungs-Umlaufweg 26 und Überführungsanordnungs-Hauptweg 27 sowie die Überführungsanordnungs-Querwege 28 sind vorzugsweise rein theoretisch und werden bevorzugt über Navigation von Software ermittelt. Im Falle von Hindernissen oder Gegenverkehr wird von den Wegen 26, 27, 28 abgewichen.

Die Übergabesysteme 29 sind identisch ausgeführt. Jedes Übergabesystem 29 hat einen Übergabebereich 31, in dem eine von einer Überführungsanordnung 25 überführte Materialrolle 11 an einen Transportwagen 32 zum weiteren Transport der Materialrolle 11 zu der Wellpappeanlage 1 übergebbar ist (Fig. 1).

In Fig. 1 sind auch Transportwagen-Verfahrwegmarkierungen 33 mit dargestellt, die die Verfahrwege der Transportwagen 32 in der Wellpappeanlage 1 bzw. benachbart zu dieser anzeigen und vorgeben. Die Transportwagen-Verfahrwegmarkierungen 33 sind bevorzugt sichtbar und als Anstrich auf den die Wellpappeanlage 1 tragenden ebenen Untergrund aufgebracht. Sie sind von den Transportwagen 32 erkennbar. Die Transportwagen 32 folgen im Normalbetrieb beim Fahren den Transportwagen-Verfahrwegmarkierungen 33, die Kurven, Weichen, Kreuzungen und gerade Abschnitte umfassen.

Mit jedem Übergabesystem 29 steht außerdem ein Zuteilweg 30 in Verbindung.

Jeder Zuteilweg 30 führt zu einer Materialrollen-Vorbereitungsanordnung 147 zum Vorbereiten der Materialrollen 11 für die weitere Be-/Verarbeitung. Das Vorbereiten der jeweiligen Materialrolle 11 umfasst beispielsweise ein Auspacken bzw. Freilegen derselben, Entfernen bzw. Zerstören von mindestens einer einen freien Materialbahnabschnitt fixierenden Fixierung zum Verhindern eines Abwickelns von der Materialrolle 11, Entfernen von mindestens einem Umreifungselement, Entfernen eines beschädigten Materialbahnabschnitts von der Materialrolle 11, Erzeugen einer definierten Endkontur bzw. Kante für die weitere Verarbeitung an der Materialbahn, Anbringen von mindestens einem (Spleiß)Klebestück an der Materialbahn und/oder Fixieren von einem endseitigen Materialbahnabschnitt an der Materialrolle 11.

Jede Materialrollen-Vorbereitungsanordnung 147 umfasst eine Aufnahmevorrichtung zur Aufnahme einer vorzubereitenden Materialrolle 11 mit einer aufgewickelten Materialbahn. Die Aufnahmevorrichtung hat eine Dreheinrichtung zum Drehantreiben bzw. Schwenken der aufgenommenen Materialrolle 11 um deren Mittelachse bzw. in deren Umfangsrichtung.

Jede Materialrollen-Vorbereitungsanordnung 147 weist außerdem mindestens eine, bevorzugt mehrere, Materialrollen-Vorbereitungseinrichtungen zur Vorbereitung der aufgenommenen Materialrolle 11 für die weitere Be-/Verarbeitung auf.

Jeder Zuteilweg 30 steht über die jeweilige Materialrollen-Vorbereitungsanordnung 147 und einem Bypass mit einem Verteilweg 34 in Verbindung, der als Kreislauf ausgeführt ist. Der Verteilweg 34 erstreckt sich zwischen der Wellpappeanlage 1 und dem Materialrollenlager 11. Er erstreckt sich parallel zu der Wellpappeanlage 1.

An den Verteilweg 34 schließt sich ein erster Deckbahnweg 35 an. Der erste Deckbahnweg 35 schließt sich an einen ersten Verteilwegabschnitt 36 und einen zweiten Verteilwegabschnitt 37 des Verteilwegs 34 an. Der erste Deckbahnweg 35 ist quasi endlos und umfasst einen ersten Deckbahnwegabschnitt 38 und einen zweiten Deckbahnwegabschnitt 39. Die Deckbahnwegabschnitte 38, 39 erstrecken sich parallel zueinander und fluchten mit den Abrolleinheiten der ersten Deckbahn-Spleißvorrichtung 3. Die Deckbahnwegabschnitte 38, 39 durchsetzen die Wellpappeanlage 1 bei einer jeweiligen Abrolleinheit und sind jenseits der Wellpappeanlage 1 miteinander verbunden.

Die Transportwagen 32 sind sowohl auf dem ersten Deckbahnwegabschnitt 38 als auch auf dem zweiten Deckbahnwegabschnitt 39 in gegensinnigen Richtungen zur Bestückung der ersten Deckbahn-Spleißvorrichtung 3 und Entfernung von Rest-Materialrollen verfahrbar. Ein umlaufender Transport der Transportwagen 32 in einer Richtung zur Bestückung der ersten Deckbahn-Spleißvorrichtung 3 und Entfernung einer Rest-Materialrolle entlang des ersten Deckbahnwegs 35 ist auch möglich.

An den Verteilweg 34 schließt sich ein erster Zwischenbahnweg 40 an. An den ersten Verteilwegabschnitt 36 und zweiten Verteilwegabschnitt 37 schließt sich der erste Zwischenbahnweg 40 an, der quasi endlos ist und einen ersten Zwischenbahnwegabschnitt 41 und einen ersten Zwischenbahnwegabschnitt 42 umfasst. Die Zwischenbahnwegabschnitte 41, 42 erstrecken sich parallel zueinander und zu den Deckbahnwegabschnitten 38, 39. Sie fluchten mit den Abrolleinheiten der ersten Zwischenbahn-Spleißvorrichtung 4. Der erste und Zwischenbahnwegabschnitt 41, 42 durchsetzen die Wellpappeanlage 1 bei der jeweiligen Abrolleinheit und sind jenseits der Wellpappeanlage 1 miteinander verbunden.

Die Transportwagen 32 sind sowohl auf dem ersten Zwischenbahnwegabschnitt 41 als auch auf dem zweiten Zwischenbahnwegabschnitt 42 in gegensinnigen Richtungen zur Bestückung der ersten Zwischenbahn-Spleißvorrichtung 4 und Entfernung von Rest-Materialrollen verfahrbar. Ein umlaufender Transport der Transportwagen 32 in einer Richtung zur Bestückung der ersten Zwischenbahn-Spleißvorrichtung 4 und Entfernung einer Rest-Materialrolle entlang des ersten Zwischenbahnwegs 40 ist auch möglich.

An den Verteilweg 34 schließt sich ein zweiter Deckbahnweg 43 an. An den ersten Verteilwegabschnitt 36 und den zweiten Verteilwegabschnitt 37 schließt sich der zweite Deckbahnweg 43 an, der quasi endlos ist und einen ersten Deckbahnwegabschnitt 44 und eine zweiten Deckbahnwegabschnitt 45 umfasst. Die Deckbahnwegabschnitte 44, 45 erstrecken sich parallel zueinander und zu den Deckbahnwegabschnitten 38, 39. Sie fluchten mit den Abrolleinheiten der zweiten Deckbahn-Spleißvorrichtung 6. Der erste und zweite Deckbahnwegabschnitt 44, 45 durchsetzen die Wellpappeanlage 1 bei der jeweiligen Abrolleinheit und sind jenseits der Wellpappeanlage 1 miteinander verbunden.

Die Transportwagen 32 sind sowohl auf dem ersten Deckbahnwegabschnitt 44 als auch auf dem zweiten Deckbahnabschnitt 45 in gegensinnigen Richtungen zur Bestückung der zweiten Deckbahn-Spleißvorrichtung 6 und Entfernung von Rest-Materialrollen verfahrbar. Ein umlaufender Transport der Transportwagen 32 in einer Richtung zur Bestückung der zweiten Deckbahn-Spleißvorrichtung 6 und Entfernung einer Rest-Materialrolle entlang des zweiten Deckbahnwegs 43 ist auch möglich.

An den Verteilweg 34 schließt sich ein zweiter Zwischenbahnweg 46 an. An den ersten Verteilwegabschnitt 36 und zweiten Verteilwegabschnitt 37 schließt sich der zweite Zwischenbahnweg 46 an, der quasi endlos ist und einen ersten Zwischenbahnwegabschnitt 47 und einen zweiten Zwischenbahnwegabschnitt 48 umfasst. Die Zwischenbahnwegabschnitte 47, 48 erstrecken sich parallel zueinander und zu den Deckbahnwegabschnitten 38, 39. Sie fluchten mit den Abrolleinheiten der zweiten Zwischenbahn-Spleißvorrichtung 7. Der erste und zweite Zwischenbahnwegabschnitt 47, 48 durchsetzen die Wellpappeanlage 1 bei der jeweiligen Abrolleinheit und sind jenseits der Wellpappeanlage 1 miteinander verbunden.

Die Transportwagen 32 sind sowohl auf dem ersten Zwischenbahnwegabschnitt 47 als auch auf dem zweiten Zwischenbahnwegabschnitt 48 in gegensinnigen Richtungen zur Bestückung der zweiten Zwischenbahn-Spleißvorrichtung 7 und Entfernung von Rest-Materialrollen verfahrbar. Ein umlaufender Transport der Transportwagen 32 in einer Richtung zur Bestückung der zweiten Zwischenbahn-Spleißvorrichtung 7 und Entfernung einer Rest-Materialrolle entlang des zweiten Zwischenbahnwegs 45 ist auch möglich.

An den Verteilweg 34 schließt sich ein Kaschierbahnweg 49 an. An den ersten Verteilwegabschnitt 36 und zweiten Verteilwegabschnitt 37 schließt sich der Kaschierbahnweg 49 an, der quasi endlos ist und einen ersten Kaschierbahnwegabschnitt 50 und einen zweiten Kaschierbahnwegabschnitt 51 umfasst. Die Kaschierbahnwegabschnitte 50, 51 erstrecken sich parallel zueinander und zu den Deckbahnwegabschnitten 38, 39. Sie fluchten mit den Abrolleinheiten der Kaschierbahn-Spleißvorrichtung 8. Der erste und zweite Kaschierbahnwegabschnitt 50, 51 durchsetzen die Wellpappeanlage 1 bei der jeweiligen Abrolleinheit und sind jenseits der Wellpappeanlage 1 miteinander verbunden.

Die Transportwagen 32 sind sowohl auf dem ersten Kaschierbahnwegabschnitt 50 als auch auf dem zweiten Kaschierbahnwegabschnitt 51 in gegensinnigen Richtungen zur Bestückung der Kaschierbahn-Spleißvorrichtung 8 und Entfernung von Rest-Materialrollen verfahrbar. Ein umlaufender Transport der Transportwagen 32 in einer Richtung zur Bestückung der Kaschierbahn-Spleißvorrichtung 8 und Entfernung einer Rest-Materialrolle entlang des Kaschierbahnwegs 49 ist auch möglich.

Die Deckbahnwege 35, 43, die Zwischenbahnwege 40, 16 und der Kaschierbahnweg 49 sind beabstandet zueinander an den Verteilweg 34 angeschlossen und verlaufen beabstandet zueinander.

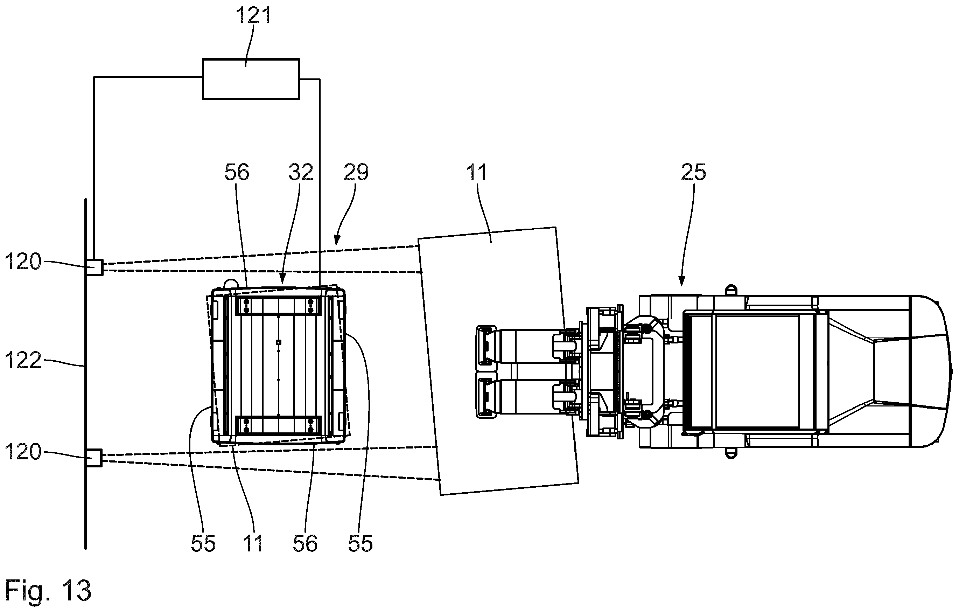

Die Transportwagen 32 sind identisch ausgeführt. Jeder Transportwagen 32 hat ein starres Gestell 52, das rahmenartig bzw. chassisartig ist (beispielsweise Fig. 13 bis 15). Das Gestell 52 trägt eine Materialrollenaufnahme 53 für eine liegende Materialrolle 11 und mehrere Radeinheiten 54 zum Verfahren des Transportwagens 32 auf dem Untergrund sowie eine Kommunikationseinrichtung (nicht dargestellt).

In Abhängigkeit von über die Kommunikationseinrichtung empfangener Signale bzw. Informationen ist der Transportwagen 32 in Bewegung versetzbar. Den Transportwagen 32 sind entsprechend auch Weg- bzw. Zielinformationen übermittelbar. Der Transportwagen 32 ist gerade oder kurvenförmig verfahrbar.

Das Gestell 52 hat zwei Längsseiten 55 und zwei Querseiten 56. Die Längsseiten 55 verlaufen parallel zueinander. Sie erstrecken sich parallel zu der Materialrollenaufnahme 53. Auch die Querseiten 56 erstrecken sich parallel zueinander. Die Längsseiten 55 und die Querseiten 56 sind rechtwinklig zueinander orientiert.

An dem Gestell 52 ist ein eigenständiger Verfahrantrieb (nicht dargestellt) angeordnet, der einen Elektromotor umfasst.

Mit jedem Verfahrantrieb steht ein Antriebslaufrad (nicht dargestellt) in Antriebsverbindung, das drehbar bzw. drehantreibbar gelagert ist. Die Drehachsen der Antriebslaufräder fluchten miteinander. Sie erstrecken sich senkrecht zu den Längsseiten 55. Die Antriebslaufräder befinden sich im Bezug auf eine Längsrichtung des Transportwagens 32 in der Mitte. Sie sind unlenkbar und beim Verfahren des Transportwagens 32 gegenüber dem Untergrund abgestützt.

Ferner ist an jedem Eckbereich des Gestells 52 eine Lenkradeinheit 57 angeordnet, die jeweils ein Zwillingsrad umfasst. Die Zwillingsräder sind drehbar gelagert. Jede Lenkradeinheit 57 ist um eine vertikale Lenkachse 58 selbstständig auslenkbar. Die Lenkradeinheiten 57 sind frei auslenkbar, insbesondere um 360°. Die Lenkachsen 58 verlaufen parallel zueinander.

Die Materialrollenaufnahme 53 ist durch mindestens ein Rinnenteil 59 gebildet, das jeweils auf dem Gestell 52 vertikal verlagerbar gelagert ist und nach oben offen ist. Das mindestens eine Rinnenteil 59 erstreckt sich benachbart zu den Querseiten 56 zwischen den Längsseiten 55. Seine tiefste Aufnahmestelle befindet sich mittig zwischen den Längsseiten 55. Es ist symmetrisch ausgebildet. Das mindestens eine Rinnenteil 59 hat benachbart zu den Längsseiten 55 seine höchste Stelle. Es ist benachbart zu den Querseiten 56 des Gestells 52 bzw. in Längsrichtung offen.

Die Materialrollenaufnahme 53 trägt unten mindestens eine horizontal verlaufende Abstützplatte 60.

An dem Gestell 52 ist außerdem ein Akkumulator (nicht dargestellt) angeordnet. Bei dem Akkumulator handelt es sich um einen wieder aufladbaren Speicher für elektrische Energie für die Verfahrantriebe.

An dem Gestell 52 ist des Weiteren eine Transportwagen-Steuerung (nicht dargestellt) angeordnet, die im Stande ist, die beiden Verfahrantriebe unabhängig voneinander anzusteuern. Die Transportwagen-Steuerung steht außerdem mit der Kommunikationseinrichtung in Signalverbindung.

Die elektronischen bzw. elektrischen Komponenten des Transportwagens 32 sind in geeigneter Weise elektrisch miteinander verbunden.

An dem Gestell 52 ist des Weiteren in einem vorderen Bereich eine Sicherheitseinrichtung (nicht dargestellt) angeordnet, die als Scanner, insbesondere Laserscanner, ausgeführt ist. Die Sicherheitseinrichtung steht mit der Transportwagen-Steuerung in Signalverbindung. Sie ist im Stande, den Transportwagen 32 bei erkannter Gefahr sofort zu stoppen.

Benachbart zu der beim Verfahren vorderen Querseite 56 des Transportwagens 32 ist an dem Gestell 52 vorne eine Verfahrweg-Erkennungseinrichtung (nicht dargestellt) angeordnet, die als Sensor ausgeführt ist. Die Verfahrweg-Erkennungseinrichtung ist länglich ausgebildet und erstreckt sich horizontal. Sie verläuft senkrecht zu der Längsrichtung des Transportwagens 32. Sie ist im Stande, einen vorgegebenen Verfahrweg zu erkennen und steht mit der Transportwagen-Steuerung in Signalverbindung. Dem Transportwagen 32 ist alternativ über Software ein Verfahrweg bzw. Ziel vorgebbar.

Ferner hat der Transportwagen 32 einen Materialrollen-Erkennungssensor (nicht dargestellt). Der Materialrollen-Erkennungssensor ist im Stande zu erkennen, ob der Transportwagen 32 beladen oder unbeladen ist. Der Materialrollen-Erkennungssensor befindet sich in der Materialrollenaufnahme 53 und steht mit der Transportwagen-Steuerung in Signalverbindung.

Der Transportwagen 32 ist durch Bestromung des mindestens einen Verfahrantriebs verfahrbar. Die notwendige elektrische Energie stammt aus dem Akkumulator. Die Verfahrantriebe empfangen indirekt entsprechende Fahrsignale über die Verfahrweg-Erkennungseinrichtung und/oder über die Kommunikationseinrichtung.

Wenn die beiden Antriebslaufräder gegensinnig betragsgleich angetrieben werden, dreht sich der Transportwagen 32 auf der Stelle. Wenn das eine Antriebslaufrad stärker als das andere Antriebslaufrad angetrieben wird, so macht der Transportwagen 32 eine Kurvenfahrt. Die Lenkradeinheiten 57 verstellen sich dabei automatisch um die jeweilige Lenkachse 58. Wenn die beiden Antriebslaufräder identisch und gleichsinnig angetrieben werden, so fährt der Transportwagen 32 gerade. Die Lenkradeinheiten 57 stellen sich automatisch entsprechend auf eine Geradeaus-Fahrt ein.

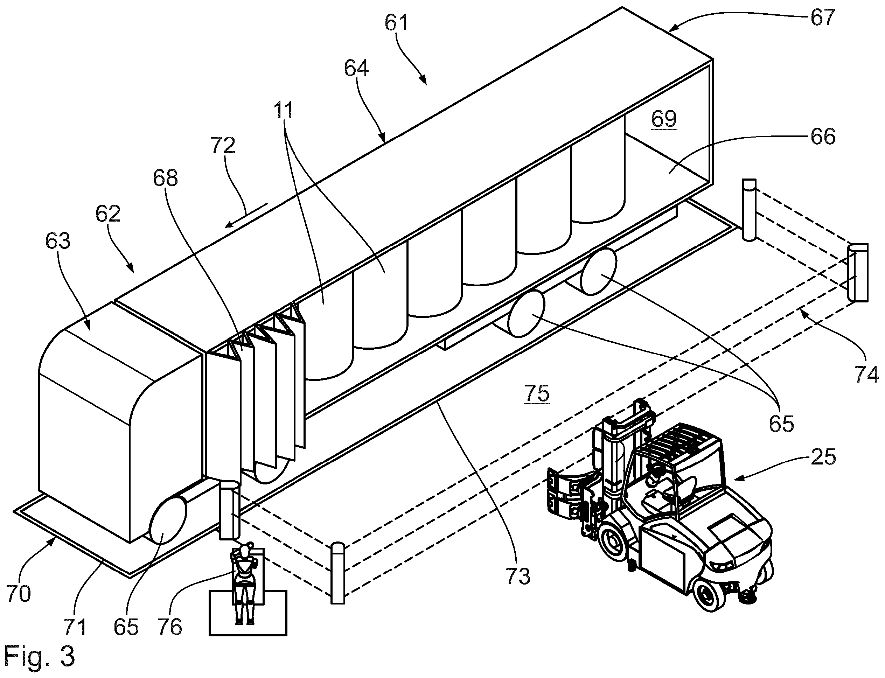

Der Überführungsanordnungs-Hauptweg 27 beginnt in einem Anliefersystem 61, das einen Sattelzug 62 umfasst (Fig. 1 bis 5). Mit dem Sattelzug 62 werden neue Materialrollen 11 angeliefert. Der Sattelzug 62 umfasst eine Sattelzugmaschine 63 und einen Sattelauflieger 64.

Die Sattelzugmaschine 63 wiederum weist ein Fahrgestell, einen Motor und ein Getriebe sowie eine Kupplung für den Sattelauflieger 64 auf.

Der Sattelauflieger 64 bildet einen Anhänger und umfasst Hinterachsen 65, die sich gegenüber einem Boden bzw. Platz abstützen. Er hat eine ebene Ladefläche 66 zum Tragen der Materialrollen 11. Die Materialrollen 11 stehen auf der Ladefläche 66 in mindestens einer Reihe längs des Sattelaufliegers 64. Sie sind in der Längsrichtung des Sattelaufliegers 64 horizontal beabstandet zueinander angeordnet. Alternativ berühren sie sich umfangsseitig. Der Sattelauflieger 64 weist außerdem ein Plangestell 67 auf, das eine Plane 68 trägt und einen Laderaum 69 räumlich begrenzt. Die Plane 68 ist seitlich und vorzugsweise auch hinten öffenbar, was einen Zugang zu dem Laderaum 69 ermöglicht. Der Laderaum 69 ist durch die Ladefläche 66 nach unten räumlich begrenzt.

Eine bodenseitige Haltemarkierung 70 gibt eine Soll-Halteposition für den Sattelzug 62 vor. Die Haltemarkierung 70 umfasst eine Längs-Haltelinie 71, die eine Längs-Soll-Halteposition des Sattelzugs 62 in dessen Längsrichtung 72 bzw. Fahrtrichtung vorgibt. Ferner hat die Haltemarkierung 70 zwei parallele Quer-Haltelinien 73, die beabstandet zueinander verlaufen und eine Soll-Quer-Halteposition senkrecht zu der Längsrichtung 72 bzw. Fahrtrichtung des Sattelzugs 62 vorgeben. Die Haltemarkierung 70 hat vorzugsweise eine rechteckige Kontur, die im Wesentlichen der Grundfläche des Sattelzugs 62 entspricht.

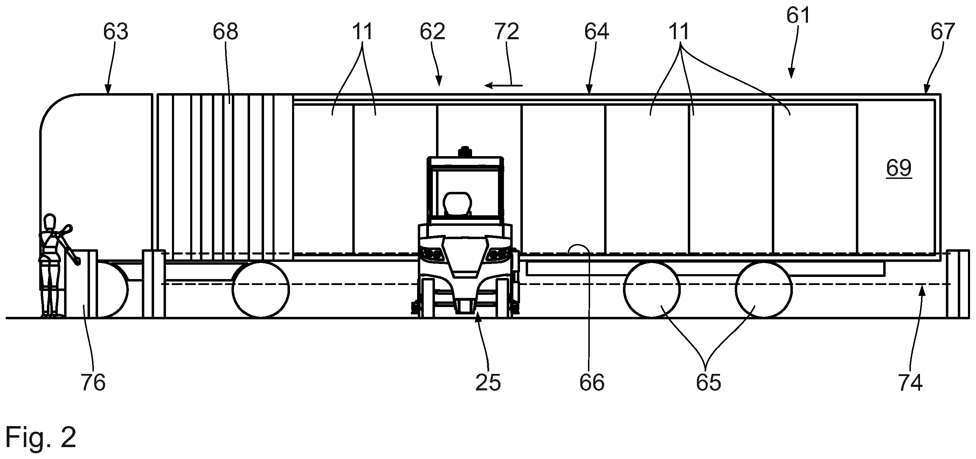

Das Anliefersystem 61 gemäß Fig. 2, 3 und 5 umfasst außerdem eine Anliefer- bzw. Entlade-Sicherheitseinrichtung 74, die als Sicherheitslichtschranke ausgeführt ist und einen Anliefer- bzw. Entladebereich 75 benachbart zu dem in der Soll-Halteposition abgestellten Sattelzug 62 vor Betreten durch Personen sichert. Die Anliefer-Sicherheitseinrichtung 74 ist durch ein Bedienterminal 76 durch den Fahrer des Sattelzugs 62 oder eine andere Person aktivierbar. Das Bedienterminal 76 befindet sich dann benachbart zu der Sattelzugmaschine 63. Der Fahrer bzw. die andere Person aktiviert über das Bedienterminal 76 die Anliefer-Sicherheitseinrichtung 74 erst dann, wenn die Plane 68 so entfernt ist, dass die neu angelieferten Materialrollen 11 von dem Sattelzug 62 entladbar sind. Die Überführungsanordnung 25 fährt erst dann in den Anlieferbereich 75 ein, wenn die Anliefer-Sicherheitseinrichtung 74 aktiviert worden ist.

Die Überführungsanordnung 25 ist als automatisiertes bzw. fahrerloses Flurförderzeug bzw. Stapler ausgebildet (Fig. 6 bis 9). Das Flurförderzeug 25 hat einen auf Vorderräder 77 und Hinterräder 78 abgestützten Rahmen 79, welcher eine Kabine 80 und eine vordere Hydraulik-Hubvorrichtung 81 trägt. Die Vorderräder 77 und Hinterräder 78 stützen sich gegenüber dem Untergrund ab. Die Hinterräder 78 sind auslenkbar.

Der Rahmen 79 trägt außerdem eine Batterie bzw. einen Akkumulator (nicht dargestellt) und mindestens einen damit in elektrischer Verbindung stehenden Verfahrantrieb (nicht dargestellt), der bevorzugt mit den Hinterrädern 78 in Antriebsverbindung steht.

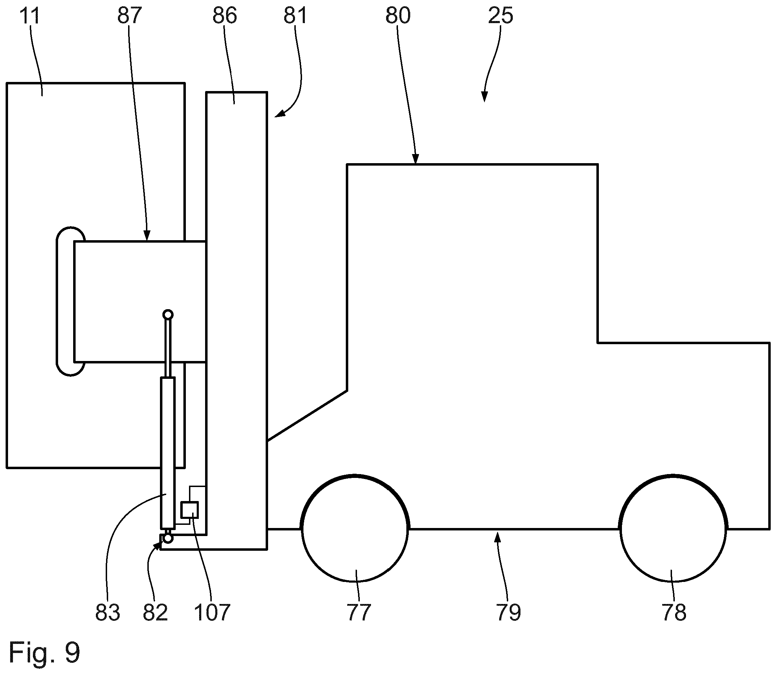

Der Rahmen 79 trägt außerdem ein Hydraulikaggregat 82 (Fig. 9). Das Hydraulikaggregat 82 wiederum steht mit einem von dem Rahmen 79 getragenen Hydrauliktank zur Versorgung der Hydraulik-Hubvorrichtung 81 mit Hydraulikfluid in Strömungsverbindung. Es umfasst eine Hydraulikpumpe und eine Hydraulik-Steuereinrichtung, die mit der Hydraulikpumpe und mindestens einem Hubzylinder 83 der Hydraulik-Hubvorrichtung 81 in Strömungsverbindung steht. Insbesondere findet Hydrauliköl Anwendung.

In der Kabine 80 sind ein Fahrersitz 84a sowie Bedienelemente des Flurförderzeugs 25 für einen Fahrer, falls erforderlich, angeordnet.

Das Hydraulikaggregat 82 dient bevorzugt auch zum Betrieb einer Lenkeinrichtung des Flurförderzeugs 25. In der Kabine 80 befindet sich auch ein Lenkrad 84b zur Betätigung der Lenkeinrichtung. Die Hydraulik-Steuereinrichtung steht dann auch mit der Lenkeinrichtung in Strömungsverbindung. Sie dient zur Steuerung der Hydraulikpumpe, insbesondere des mindestens einen Hubzylinders 83 und der Lenkeinrichtung. Durch die Lenkeinrichtung sind die Hinterräder 78 auslenkbar, damit das Flurförderzeug 25 eine Kurvenfahrt ausführen kann.

Das Flurförderzeug 25 weist außerdem eine elektrische Flurförderzeug-Steuereinheit 85 auf, die auch mit der Hydraulik-Steuereinrichtung in Signalverbindung steht.

Die Hydraulik-Hubvorrichtung 81 umfasst einen an dem Flurförderzeug 25 vorne angeordneten, vertikal erstreckenden Hubmast 86 mit einer daran nach oben und unten verfahrbaren Greifvorrichtung 87 zum sicheren Greifen und Heben sowie Halten einer Materialrolle 11.

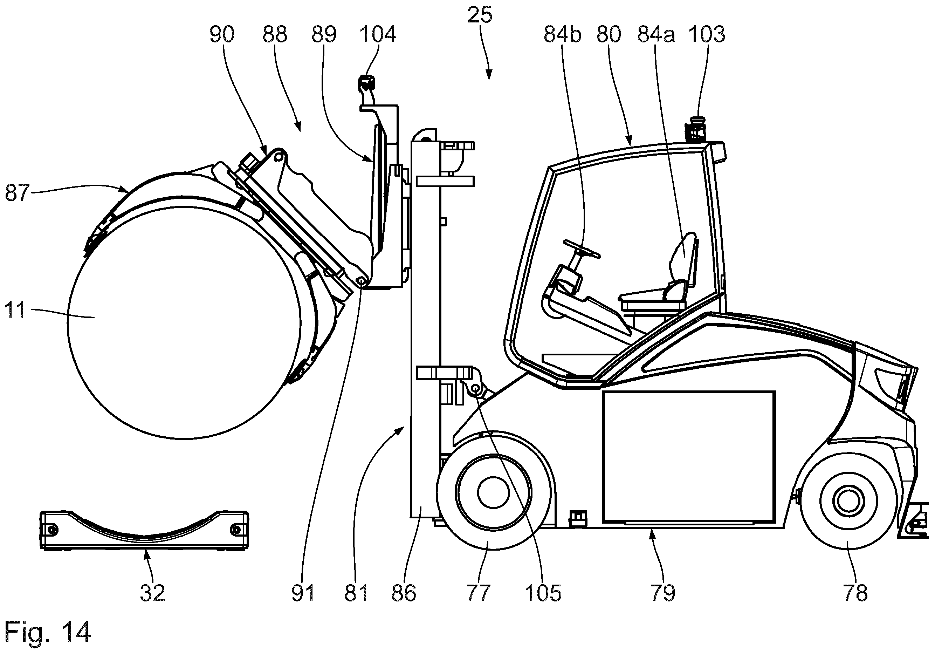

Die Greifvorrichtung 87 ist über eine beispielsweise in Fig. 14 gezeigte Kupplungsvorrichtung 88 an dem Hubmast 86 angeordnet. Die Kupplungsvorrichtung 88 umfasst eine an den Hubmast 86 angeschlossene Anschlusseinrichtung 89 und eine mit dieser beweglich verbundene Trageinrichtung 90. Die Anschlusseinrichtung 89 ist längs des Hubmasts 86 geführt verfahrbar. Sie ist beispielsweise als Schlitten ausgeführt. Die Trageinrichtung 90 ist gegenüber der Anschlusseinrichtung 89 um eine Schwenkachse 91 verschwenkbar. Ferner ist die gesamte Greifvorrichtung 87 verdrehbar. Sie umfasst einen plattenartigen Tragkörper 92.

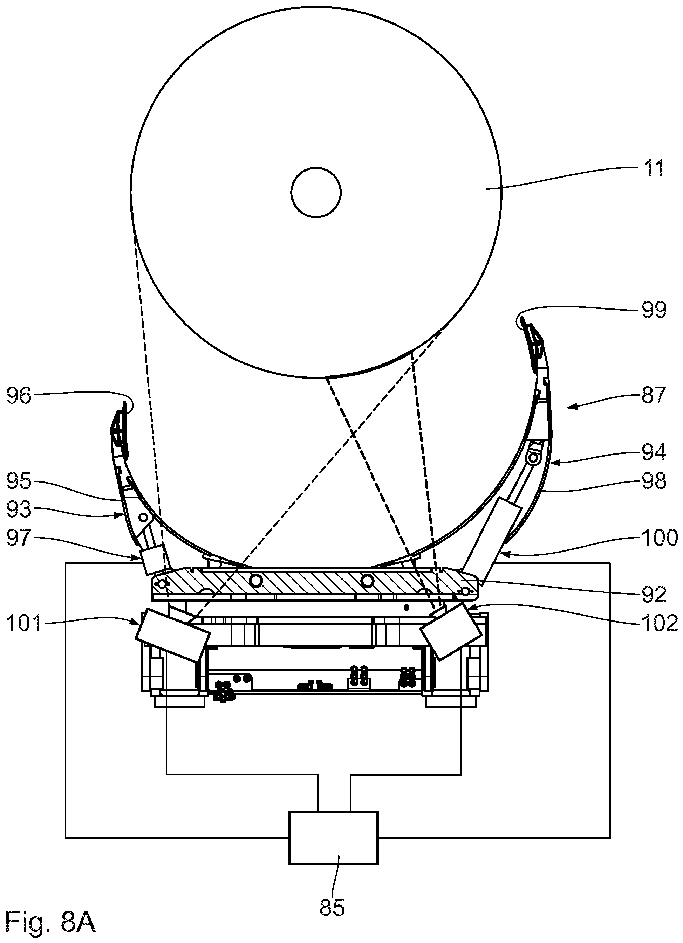

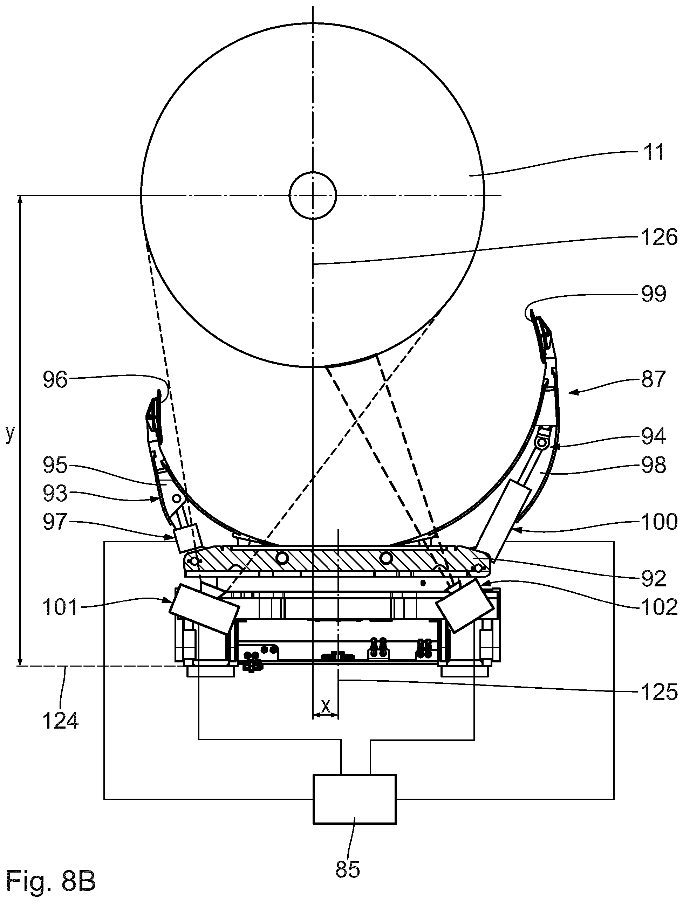

Die Trageinrichtung 90 umfasst einen plattenartigen Tragkörper 92. An dem Tragkörper 92 ist eine erste Greifarmeinrichtung 93 und eine zweite Greifarmeinrichtung 94 angelenkt. Die Greifarmeinrichtungen 93, 94 sind beabstandet zueinander an dem Tragkörper 92 angelenkt und angeordnet. Sie haben parallel zueinander verlaufende Schwenkachsen und sind relativ zueinander verschwenkbar (Fig. 8A).

Die erste Greifarmeinrichtung 93 hat einen ersten Greifarm 95 und eine erste Anlegebacke 96, die an einem freien Ende des ersten Greifarms 95 frei schwenkbar angeordnet ist. Der erste Greifarm 95 ist über eine erste, längenveränderliche Verstell-Zylindereinheit 97 verschwenkbar. Die erste Verstell-Zylindereinheit 97 ist zwischen dem ersten Greifarm 95 und dem Tragkörper 92 angeordnet und mit diesen gelenkig verbunden.

Die zweite Greifarmeinrichtung 94 hat einen zweiten Greifarm 98 und eine zweite Anlegebacke 99, die an einem freien Ende des zweiten Greifarms 98 frei schwenkbar angeordnet ist. Der zweite Greifarm 98 ist über eine zweite, längenveränderliche Verstell-Zylindereinheit 100 verschwenkbar. Die zweite Verstell-Zylindereinheit 100 ist zwischen dem zweiten Greifarm 98 und dem Tragkörper 92 angeordnet und mit diesen gelenkig verbunden.

Die Greifarme 95, 98 sind unter Begrenzung eines im Wesentlichen teilkreisförmigen Materialrollen-Aufnahmeraums gekrümmt. Die Anlegebacken 96, 99 sind günstigerweise konstruktiv identisch. Ihre Anlegeflächen sind einander zugewandt.

Der zweite Greifarm 98 ist wesentlich länger als der erste Greifarm 95. Er ist vorzugsweise mindestens 30 %, bevorzugt mindestens 40 %, bevorzugt mindestens 50 %, länger als der erste Greifarm 95. Er ist höchstens 120 %, bevorzugt höchstens 100 %, bevorzugt höchstens 80 %, länger als der erste Greifarm 95. Die Greifvorrichtung 87 ist asymmetrisch, sodass sie auf engstem Raum einsetzbar ist. Die Greifarmeinrichtungen 93, 94 haben eine unterschiedliche Länge bzw. Größe. Die Anlegeflächen der Anlegebacken 96, 99 haben normalerweise unterschiedliche Abstände zu dem Tragkörper 92.

Jede Verstell-Zylindereinheit 97, 100 steht mit der Hydraulik-Steuereinrichtung des Flurförderzeugs 25 zur Betätigung derselben in Verbindung.

Die Kupplungsvorrichtung 88 trägt außerdem eine Materialrollen-Erfassungsvorrichtung, die eine erste Materialrollen-Erfassungseinheit 101 und eine zweite Materialrollen-Erfassungseinheit 102 umfasst (vor allem Fig. 8A-8D). Die Materialrollen-Erfassungseinheiten 101, 102 sind seitlich beabstandet zueinander angeordnet. Sie sind benachbart zu Anlenkstellen der Verstell-Zylindereinheiten 97, 100 an dem Tragkörper 92 angeordnet. Die Materialrollen-Erfassungseinheiten 101, 102 sind derart orientiert, dass sie im Stande sind, eine zu überführende bzw. zu greifende Materialrolle 11 zu erfassen. Sie sind in Bezug auf das Flurförderzeug 25 nach vorne gerichtet. Außerdem sind sie schräg zueinander angeordnet. Die Materialrollen-Erfassungseinheiten 101, 102 sind aufeinander zu verkippt angeordnet, sodass deren Erfassungsbereiche einander überlagern bzw. überdecken.

Jede Materialrollen-Erfassungseinheit 101, 102 steht mit der Flurförderzeug-Steuereinheit 85 in Signalverbindung.

An der Kabine 80 ist oben ein Navigationssensor 103 zum Navigieren des Flurförderzeugs 25 angeordnet. Der Navigationssensor 103 steht mit der Flurförderzeug-Steuereinheit 85 in Signalverbindung.

Die Kupplungsvorrichtung 88 trägt eine Objekt-Erkennungsvorrichtung 104, die in Bezug auf das Flurförderzeug 25 nach vorne gerichtet ist. Die Objekt-Erkennungsvorrichtung 104 steht mit der Flurförderzeug-Steuereinheit 85 in Signalverbindung.

Der Hubmast 86 ist um eine horizontal verlaufende Neigungsachse 105 in seiner Neigung unten verstellbar. Er ist in Bezug auf die Kabine 80 nach vorne und hinten schwenkbar. Dem Hubmast 86 ist ein Neigungssensor 106 zugeordnet, der im Stande ist, die aktuelle Neigung des Hubmasts 86 und somit auch die aktuelle Neigung der Greifvorrichtung 87 zu erfassen. Der Neigungssensor 106 ist an dem Rahmen 79 angeordnet. Der Neigungssensor 106 steht mit der Flurförderzeug-Steuereinheit 85 in Signalverbindung.

Die Hydraulik-Hubvorrichtung 81 umfasst eine Hydraulikfluid-Druckänderungs-Erkennungseinrichtung 107, die in einer Hydraulikleitung des Flurförderzeugs 25 angeordnet und im Stande ist, eine Druckveränderung des Hydraulikfluids der Hydraulik-Hubvorrichtung 81 bei Änderung einer Last zu erkennen (Fig. 9). Die Hydraulikfluid-Druckänderungs-Erkennungseinrichtung 107 steht mit der Flurförderzeug-Steuereinheit 85 in Signalverbindung.

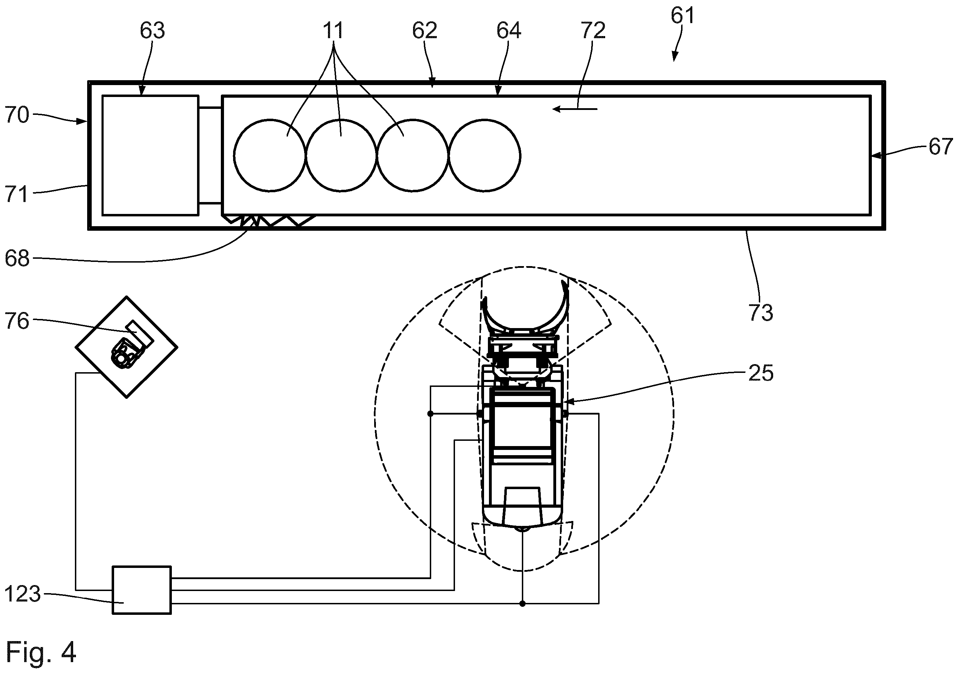

Das Flurförderzeug 25 hat ferner mehrere Sicherheits-Laserscanvorrichtungen 108, die mit der Flurförderzeug-Steuereinheit 85 in Signalverbindung stehen und imstande sind, bei erkannter Gefahr das Flurförderzeug 25 sofort zu stoppen. Eine erste Sicherheits-Laserscanvorrichtung 108 ist hinten an dem Rahmen 79 angeordnet und nach hinten in Bezug auf das Flurförderzeug 25 gerichtet. Eine zweite Sicherheits-Laserscanvorrichtung 108 ist unten an dem Hubmast 86 angeordnet und in Bezug auf das Flurförderzeug 25 nach vorne gerichtet. An dem Rahmen 79 sind außerdem dritte Sicherheits-Laserscanvorrichtungen 108 angeordnet, die jeweils nach seitlich außen gerichtet sind. Ein derart ausgestattetes Flurförderzeug 25 findet beispielsweise bei dem in Fig. 4 gezeigten Anliefersystem 61 Anwendung. Ein solches Anliefersystem 61 kommt ohne Sicherheitslichtschranke 74 aus. Die Sicherheits-Laserscanvorrichtungen 108 stehen mit einer zentralen Steuerung 123 in Signalverbindung, die mit einem Bedienterminal 76 in Signalverbindung steht.

Jeder Antriebsachse 109 des Flurförderzeugs 25 ist ein Antriebsachsen-Sicherheitsencoder 110 zugeordnet, der im Stande ist, Informationen in Bezug auf Winkel und Umdrehungszahlen des Antriebs bzw. der entsprechenden Antriebsachse 109 zu liefern. Die Antriebsachsen-Sicherheitsencoder 25 stehen mit der Flurförderzeug-Steuereinheit 85 in Signalverbindung. Das Flurförderzeug 25 ist so besonders gut manövrierbar.

Einer Lenkachse 111 des Flurförderzeugs 25 ist ein Lenkachsen-Sicherheitsencoder 112 zugeordnet, der im Stande ist, Informationen über Lage und Winkel der Lenkachse 111 zu liefern. Der Lenkachsen-Sicherheitsencoder 112 steht mit der Flurförderzeug-Steuereinheit 85 in Signalverbindung. Das Flurförderzeug 25 ist so besonders gut manövrierbar.

Der Kupplungsvorrichtung 88 ist ein Greifarmwinkel-Encoder 113 zugeordnet, der im Stande ist, Informationen bezüglich Lage und Winkel der Greifarmeinrichtungen 93, 94 zu liefern. Jeder Greifarmwinkel-Encoder 113 steht mit der Flurförderzeug-Steuereinheit 85 in Signalverbindung. Die Greifvorrichtung 87 ist so besonders sicher einsetzbar und in Bezug auf die zu greifende Materialrolle 11 ausrichtbar.

Die Trageinrichtung 90 trägt außerdem einen Neigungssensor 114, der im Stande ist, eine Neigung der Greifvorrichtung 87 gegenüber dem Hubmast 86 zu erfassen. Der Neigungssensor 114 steht mit der Flurförderzeug-Steuereinheit 85 in Signalverbindung. Die Greifvorrichtung 87 ist so besonders sicher einsetzbar und in Bezug auf die zu greifende Materialrolle 11 ausrichtbar.

Ferner trägt die Trageinrichtung 90 einen Neigungssensor 115, um eine Neigung der Greifvorrichtung 87 gegenüber einer Vertikalen zu erkennen. Der Neigungssensor 115 steht mit der Flurförderzeug-Steuereinheit 85 in Signalverbindung. Die Greifvorrichtung 87 ist so besonders sicher einsetzbar und in Bezug auf die zu greifende Materialrolle 11 ausrichtbar.

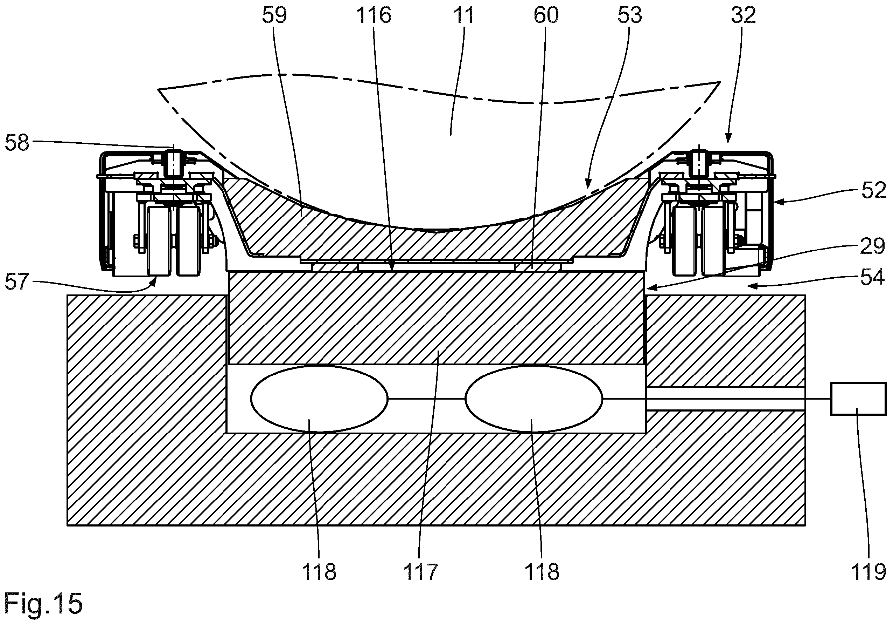

Jedes Übergabesystem 29 umfasst in dem jeweiligen Übergabebereich 31 eine Transportwagen-Entlastungsvorrichtung 116 (Fig. 15), die einen in der Höhe verlagerbaren starren Anhebekörper 117 umfasst. Im Nichtgebrauch ist der Anhebekörper 117 bündig mit dem benachbarten Untergrund. Jeder Anhebekörper 117 ist in der Höhe mittels einer Kissenanordnung 118 geführt verlagerbar, die mittels eines Aktors 119 dafür mit einem Gas, wie Luft, aufblasbar ist. Jeder Anhebekörper 117 ist beispielsweise um mindestens 1 cm, bevorzugt mindestens 3 cm, bevorzugt mindestens 5 cm, anhebbar. Er ist vorzugsweise um höchstens 20 cm, bevorzugt höchstens 15 cm, bevorzugt höchstens 10 cm, anhebbar. Zum Absenken des Anhebekörpers 117 ist mittels des zugehörigen Aktors 119 das Gas aus der Kissenanordnung 118 wieder kontrolliert auslassbar. Anstelle einer Kissenanordnung 118 ist beispielsweise ein Spindel- oder Hydrauliksystem einsetzbar.

Jeder Anhebekörper 117 ist beispielsweise plattenartig bzw. blockartig und hat eine rechteckige obere Angreiffläche. Jede Angreiffläche weist eine erste Abmessung auf, die in etwa einer Querabmessung des mindestens einen Rinnenteils 59 entspricht. Sie ist kleiner als die Querabmessung eines gesamten Transportwagens 32. Eine zu der ersten Abmessung senkrechte zweite Abmessung der Angreiffläche entspricht beispielsweise einer Längsabmessung des mindestens einen Rinnenteils 59.

Jedes Übergabesystem 29 umfasst außerdem zwei Materialrollen-Orientierungs-Erfassungssensoren 120, die im Stande sind, die Orientierung einer überführten Materialrolle 11 in dem jeweiligen Übergabebereich 31 bzw. benachbart zu diesem zu erfassen. Die Materialrollen-Orientierungs-Erfassungssensoren 120 sind, bevorzugt auf einer gemeinsamen Höhe, beabstandet seitlich nebeneinander angeordnet. Sie erfassen im Einsatz axiale Endbereiche der Materialrolle 11. Insbesondere ist so eine Schrägstellung der Materialrolle 11, vor allem in der Horizontalen, erfassbar. Jeder Materialrollen-Orientierungs-Erfassungssensor 120 steht mit einer Recheneinheit 121 in Signalverbindung, die wiederum mit dem Transportwagen 32 in dem jeweiligen Übergabebereich 31 zum Ausrichten desselben nach dieser Materialrolle 11, sofern notwendig, in Signalverbindung steht.

Jeder Übergabereich 31 ist durch einen Schutzzaun 122 geschützt, der sich entlang der Materialrollen-Orientierungs-Erfassungssensoren 120 erstreckt. Bei erkannter Gefahr wird die Übergabe sofort gestoppt.

Nachfolgend wird der Betrieb der Gesamtanlage detaillierter beschrieben.

Wenn der Sattelzug 62 von einem Fahrer in seine Soll-Halteposition gebracht worden und über das Bedienterminal 76 von dem Fahrer oder einer anderen Person eine Freigabe der Entladung des Sattelzugs 62 nach entsprechender Entfernung der Plane 68 erfolgt ist, beginnt ein Flurförderzeug 25 selbständig mit dem Abladen der Materialrollen 11 aus dem Laderaum 69. Günstigerweise erfolgt die Entladung des Sattelzugs 62 von seitlich außen. Das Flurförderzeug 25 ist im Stande, fahrerlos bzw. vollständig automatisch zu arbeiten (Fig. 1 bis 5). Es ist entsprechend über seine Kommunikationseinrichtung aktiviert worden.

Die Objekt-Erkennungsvorrichtung 104 des Flurförderzeugs 25 ist im Stande, den Sattelzug 62 zu erkennen. Insbesondere ist die Objekt-Erkennungsvorrichtung 104 im Stande, die Ladefläche 66, die Materialrollen 11 und das Plangestell 67 sowie die Plane 68, sofern vorhanden, zu erkennen.

Die Materialrollen-Erfassungseinheiten 101, 102 sind im Stande, unterschiedliche Umfangsabschnitte der zu greifenden Materialrolle 11 zu erfassen. Die erfassten Umfangsabschnitte befinden sich auf einer gemeinsamen Höhe. Der erste Erfassungsbereich der ersten Materialrollen-Erfassungseinheit 101 ist wesentlich größer als der zweite Erfassungsbereich der zweiten Materialrollen-Erfassungseinheit 102. Er erfasst vorzugsweise einen ersten Umfangsabschnitt der Materialrolle 11, der einen angularen Winkel zwischen 100° und 150° einschließt. Der zweite Erfassungsbereich der zweiten Materialrollen-Erfassungseinheit 102 erfasst bevorzugt einen zweiten Umfangsabschnitt der Materialrolle 11, der einen angularen Winkel zwischen 10° und 50° einschließt. Der zweite Erfassungsbereich liegt vollständig innerhalb des ersten Erfassungsbereichs.

Die erste Materialrollen-Erfassungseinheit 101 ist insbesondere im Stande, den tatsächlichen Durchmesser der zu greifenden Materialrolle 11 zu erfassen. Die zweite Materialrollen-Erfassungseinheit 102 ist insbesondere im Stande, ein an der Materialrolle 11 umfangsseitig angeordnetes Identifikationslabel bzw. -etikett zu erfassen bzw. zu lesen, das bevorzugt einen Barcode enthält und der eindeutigen Identifikation der zu greifenden Materialrolle 11 dient.

Vorzugsweise die erste Materialrollen-Erfassungseinheit 101 oder Flurförderzeug-Steuereinheit 85 vergleicht den tatsächlich erfassten Durchmesser der Materialrolle 11 über die eindeutige Identifikation der Materialrolle 11 mittels der zweiten Materialrollen-Erfassungseinheit 102 mit einem bekannten Durchmesserwert aus einer Datenbank und/oder dem auf dem Identifizierungslabel angegebenen Durchmesserwert.

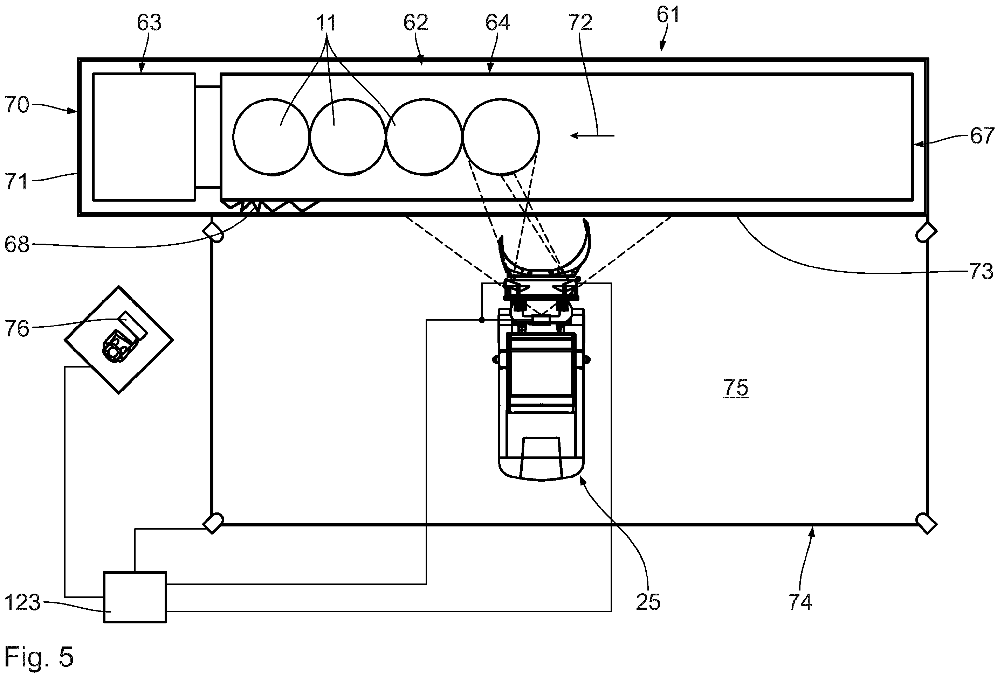

Die Anliefer-Sicherheitseinrichtung 74 ist bei der Ausführungsform gemäß Fig. 2, 3, 5 aktiv. Alternativ oder zusätzlich sind die Sicherheits-Laserscanvorrichtungen 108 aktiv (Fig. 5). Sie sind imstande, das Flurförderzeug 25 bei erkannter Gefahr sofort zu stoppen.

Zum Greifen einer zu greifenden Materialrolle 11 wird zunächst bei offener Greifvorrichtung 87 die erste Greifarmeinrichtung 93 mit ihrer ersten Anlegebacke 96 umfangsseitig mit der zu greifenden Materialrolle 11 in Anlage gebracht. Die erste Greifarmeinrichtung 93 befindet sich dabei in Abhängigkeit des Durchmessers der zu greifenden Materialrolle 11 in einer vorbestimmten Stellung. Bei Materialrollen 11 mit großem Durchmesser (zum Beispiel ≥ 150 cm) nimmt die erste Greifarmeinrichtung 93 eine äußere bzw. weite Stellung ein. Bei Materialrollen 11 mit kleinerem Durchmesser (zum Beispiel < 150 cm) nimmt die erste Greifarmeinrichtung 93 eine innere bzw. enge Stellung ein. Die erste Anlagebacke 96 liegt dann umfangsseitig an der zu greifenden Materialrolle 11 an. Dies geschieht durch entsprechendes Verfahren und Lenken des Flurförderzeugs 25. Die Greifvorrichtung 87 ist längs des Hubmasts 86 in eine entsprechende Höhe gefahren worden.

Wenn sich die zu greifende, stehende Materialrolle 11 dann in der Greifvorrichtung 87 befindet, wird die zweite Greifarmeinrichtung 94 zum eigentlichen Greifen in Richtung auf die fixierte erste Greifarmeinrichtung 93 mittels Betätigung der zweiten Verstell-Zylindereinheit 100 verschwenkt, sodass die Greifvorrichtung 87 geschlossen wird. Die zweite Greifarmeinrichtung 94 kommt dann mit ihrer zweiten Anlegebacke 99 mit der zu greifenden Materialrolle 11 unter Reduzierung des Materialrollen-Aufnahmeraums in Anlage. Die Materialrolle 11 ist von der Greifvorrichtung 87 klemmend bzw. reibschlüssig gehalten. Eine durch die Anlegebacken 96, 99 laufende Anlegeachse verläuft in der Horizontalen schräg zu einer Längsachse des Flurförderzeugs 25. Die Greifarmeinrichtungen 93, 94 befinden sich dabei bevorzugt in einer gemeinsamen, im Wesentlichen horizontalen Ebene. Der Hubmast 86 ist gegenüber einer Vertikalen ungeneigt.

Die Ansteuerung der Greifvorrichtung 87, des Verfahrantriebs und/oder der Lenkung der Überführungsanordnung 25 erfolgt in Abhängigkeit des jeweiligen Durchmessers der zu greifenden Materialrolle 11. Der Durchmesser der zu greifenden Materialrolle 11 ist beispielsweise über den ersten Materialrollen-Erfassungssensor 101 bestimmbar oder über das auf dieser Materialrolle 11 angeordnete Etikett/Label mittels des zweiten Materialrollen-Erfassungssensors 102. In Abhängigkeit der fixierten bzw. vorpositionierten Stellung der ersten Greifarmeinrichtung 93 und dem Durchmesser der zu greifenden Materialrolle 11 ergibt sich eine theoretische Soll-Mittelachse der zu greifenden Materialrolle 11. Die Soll-Mittelachse wird mit der tatsächlichen Mittelachse der realen zu greifenden Materialrolle 11 mittels der ersten und zweiten Materialrollen-Erfassungseinheit 101, 102 abgeglichen. Die Mittelachse der Sollposition verschiebt sich durch die Asymmetrie der Greifvorrichtung 87 und der Asymmetrie in der Ansteuerung der Greifarmeinrichtungen 93, 94. In Abhängigkeit dieser Werte wird insbesondere die zweite Greifarmeinrichtung 93 bzw. 94, der Verfahrantrieb und/oder die Lenkung der Überführungsanordnung 25 derart betätigt, dass sie die Materialrolle 11 sicher greifen und im Wesentlichen in einander gegenüberliegenden Umfangsbereichen der Materialrolle 11 an der Materialrolle 11 angreifen.

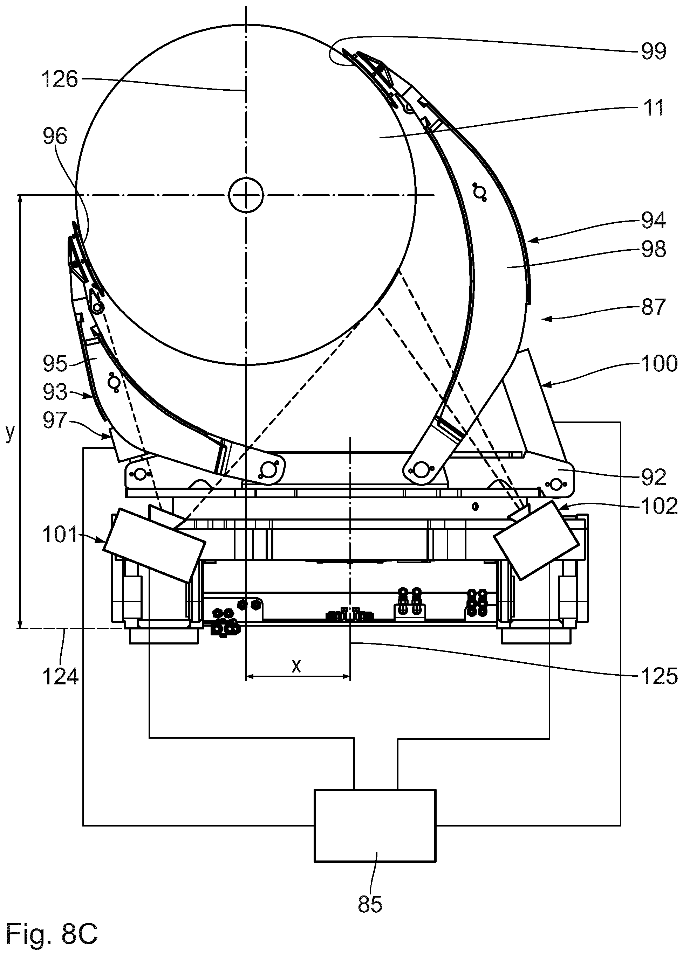

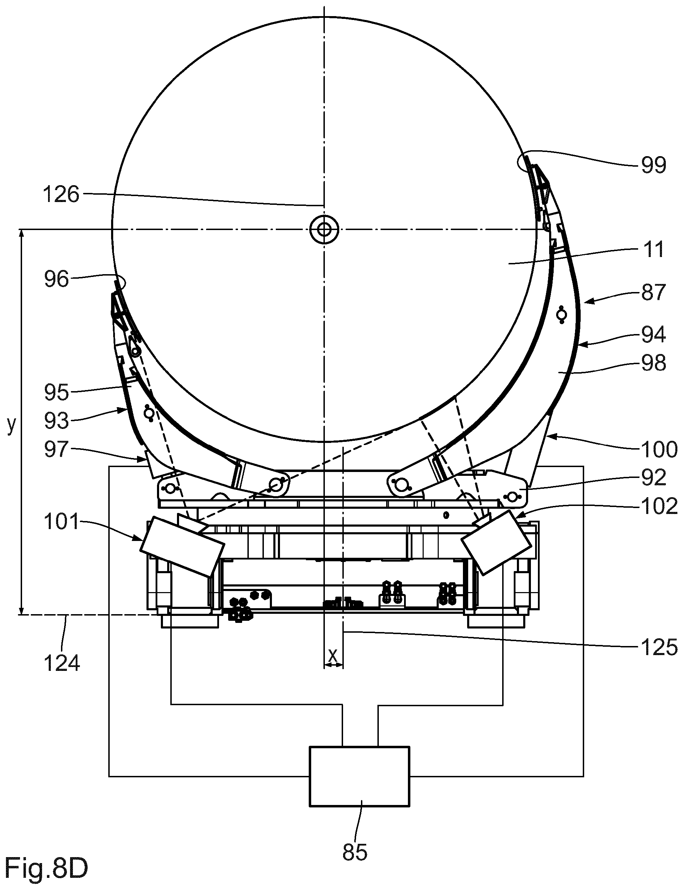

In Abhängigkeit eines Durchmessers der Materialrolle 11 verschiebt sich die Mittelachse der Materialrolle 11 gegenüber einem Nullpunkt bzw. der Mittelebene 125 der Greifvorrichtung 87. Die Mittelachse der Materialrolle 11 verschiebt sich dabei auf einer Kurve bzw. Funktion, die bei dem Anfahren der Materialrolle 11 entsprechend zu berücksichtigen ist. Wie Fig. 8C zeigt, ist bei einer einen kleinen Durchmesser aufweisenden, gegriffenen Materialrolle 11 der seitliche horizontale Versatz zwischen der Mittelebene 125 der Greifvorrichtung 87 und der die Mittelachse der Materialrolle 11 einschließenden Mittelebene 126 der Materialrolle 11 vergleichsweise groß (x-Wert). Wie Fig. 8D zeigt, ist bei einer einen großen Durchmesser aufweisenden, gegriffenen Materialrolle 11 der seitliche horizontale Versatz zwischen der Mittelebene 125 der Greifvorrichtung 87 und der die Mittelachse der Materialrolle 11 einschließenden Mittelebene 126 der Materialrolle 11 vergleichsweise klein (x-Wert). Je größer der Durchmesser der gegriffenen Materialrolle 11 ist, desto kleiner ist der seitliche horizontale Versatz zwischen der Mittelebene 125 der Greifvorrichtung 87 und der die Mittelachse der Materialrolle 11 einschließenden Mittelebene 126 der Materialrolle 11. Der erste Greifarm 95 hat beim Greifen der Materialrolle 11 eine im Wesentlichen identische fixierte bzw. vorpositionierte Stellung bzw. Auslenkung. Je kleiner der Durchmesser der gegriffenen Materialrolle 11 ist, desto weiter ist der zweite Greifarm 98 in Richtung auf den ersten Greifarm 95 bzw. die Mittelebene 125 der Greifvorrichtung 87 verschwenkt. Je kleiner der Durchmesser der gegriffenen Materialrolle 11 ist, desto weiter ist die gegriffene Materialrolle 11 von der Referenzebene 124 bzw. von den Anlenkstellen der Greifarme 95, 98 an dem Tragkörper 92 entfernt gehalten.

Beim Anheben der Materialrolle 11 erkennt die Hydraulikfluid-Druckänderungs-Erkennungseinrichtung 107 eine Druckveränderung des Hydraulikfluids der Hydraulik-Hubvorrichtung 81. Bei Erreichen eines Höhepunkts eines Anstiegs eines Drucks des Hydraulikfluids erkennt die Hydraulikfluid-Druckänderungs-Erkennungseinrichtung 107 einen vollständig angehobenen Zustand der Materialrolle 11. Die Materialrolle 11 ist dann vollständig von der Ladefläche 66 abgehoben. Die Hydraulik-Hubvorrichtung 81 hebt dann die Materialrolle 11 weiter um 20 mm an, um ein sicheres Entladen und gegebenenfalls Heben über Beschläge, Abschlüsse, Spanngurte, eine Ladekante oder dergleichen des Sattelzugs 62 zu gewährleisten, aber eine Beschädigung eines Dachs des Sattelzugs 62 zu verhindern. Sie ist dazu von der Flurförderzeug-Steuereinheit 85 entsprechend angesteuert worden.

Zum Entnehmen der Materialrollen 11 fährt das Flurförderzeug 25 rückwärts und entfernt sich dabei von dem Sattelzug 62.

Das Flurförderzeug 25 bringt dann die gegriffene Materialrolle 11 in stehender Stellung in das Materialrollenlager 10. Es fährt dabei über den Überführungsanordnungs-Hauptweg 27 auf den Überführungsanordnungs-Umlaufweg 26 und dann zu der jeweiligen Gruppe 12. Das Flurförderzeug 25 stellt die Materialrolle 11 an dem vorbestimmten Ort stehend ab. Die Objekt-Erkennungsvorrichtung 104 unterstützt das Abstellen an dem vorbestimmten Ort. Beim Abstellen wird die Greifvorrichtung 87 samt Materialrolle 11 abgesenkt. Die Hydraulikfluid-Druckänderungs-Erkennungseinrichtung 107 erkennt auch, wenn die Materialrolle 11 abgestellt worden ist. Die Materialrollen 11 bleiben in dem Materialrollenlager 10 bis sie benötigt werden.

Eine übergeordnete Steuerung veranlasst die Abholung einer zu verwenden Materialrolle 11 aus dem Materialrollenlager 10 für die Wellpappeproduktion in der Wellpappeanlage 1. Für den Betrieb der Wellpappeanlage 1 benötigte Materialrollen 11 werden über Flurförderzeuge 25 aus dem Materialrollenlager 10 geholt. Sie werden über den Überführungsanordnungs-Hauptweg 27 dem ersten Übergabesystem 29 oder über den Überführungsanordnungs-Hauptweg 27 und den Überführungsanordnungs-Querweg 28 dem zweiten Übergabesystem 29 zugeführt.

Bei dem jeweiligen Übergabebereich 31 erfolgt eine Übergabe der Materialrolle 11 von dem Flurförderzeug 25 auf einen bereitgestellten Transportwagen 32. Dabei wird zum einen die Greifvorrichtung 87 aus ihrer bisherigen Stellung um 90° verdreht, sodass die gegriffene Materialrolle 11 eine liegende, horizontale Stellung einnimmt. Ferner wird die Trageinrichtung 90 um die Schwenkachse 91 ausgeschwenkt. Die Greifvorrichtung 87 wird dann abgesenkt und geöffnet.

Vor Ablage der Materialrolle 11 in die Materialrollenaufnahme 53 wird die Kissenanordnung 118 über den Aktor 119 aufgeblasen, was zu einem Anheben bzw. vertikalen Verlagern des Anhebekörpers 117 führt. Der Anhebekörper 117 greift dann von unten an der mindestens einen Abstützplatte 60 bzw. dem mindestens einen Rinnenteil 59 an, wodurch der Transportwagen 32 entlastet wird und sämtliche Radeinheiten 54 von dem Untergrund abgehoben werden. Die Radeinheiten 54 befinden sich dann in der Luft. Eine Lasteinleitung erfolgt direkt in den angehobenen Anhebekörper 117. Die Kissenanordnung 118 ist ein Stück weit nachgiebig, um den steifen Transportwagen 25 zu schonen.

Die in der Materialrollenaufnahme 53 angeordnete Materialrolle 11 liegt auf dem Materialrollen-Erkennungssensor, der so eine Beladung mit der Materialrolle 11 erkennt. Sie erstreckt sich horizontal. Die Materialrolle 11 liegt auf dem mindestens einen Rinnenteil 59. Das mindestens eine Rinnenteil 59 liegt über einem Teilumfangsbereich der Materialrolle 11 an dieser unten und/oder seitlich an.

Der Transportwagen 32 fährt dann nach Absenkung des Anhebekörpers 117 durch den Aktor 119, falls notwendig, zu der benachbarten Materialrollen-Vorbereitungsanordnung 147, wo die angelieferte Materialrolle 11 aufgenommen und vorbereitet wird.

Nach Abschluss der Vorbereitung fährt dann die vorbereitete Materialrolle 11 mit einem/dem Transportwagen 32 zu einer entsprechenden Abrolleinheit, die diese Materialrolle 11 benötigt. Alternativ wird der Bypass genutzt und die Materialrollen-Vorbereitungsanordnung 147 umfahren.

Die zentrale Steuereinrichtung schickt anschließend den beladenen Transportwagen 32 zu der die Materialrolle 11 benötigenden Spleißvorrichtung 3, 4, 6, 7, 8.

Der Transportwagen 32 fährt dann über den entsprechenden Weg zu der Spleißvorrichtung 3, 4, 6, 7, 8.

Jedes Flurförderzeug 25 ist auch manuell steuerbar. In der Gesamtanlage kommen mehrere Flurförderzeuge 25 und Transportwagen 32 zum Einsatz. Ein Umschalten zwischen manueller Lenkung und automatisierter Lenkung bzw. automatisierter Ansteuerung von Lenkzylindern der Flurförderzeugs 25 ist günstigerweise möglich. Eine Umstellung auf manuellen Betrieb erfolgt vorzugsweise bei kritischen bzw. schwierigen Situationen in der Handhabung der zu überführenden Materialrolle 11.

Signalverbindungen können beispielsweise drahtlos oder drahtgebunden ausgeführt sein. Mit den Signalverbindungen sind Signale übertragbar bzw. übermittelbar.

Die Gesamtanlage ist quasi vollständig automatisiert betreibbar.

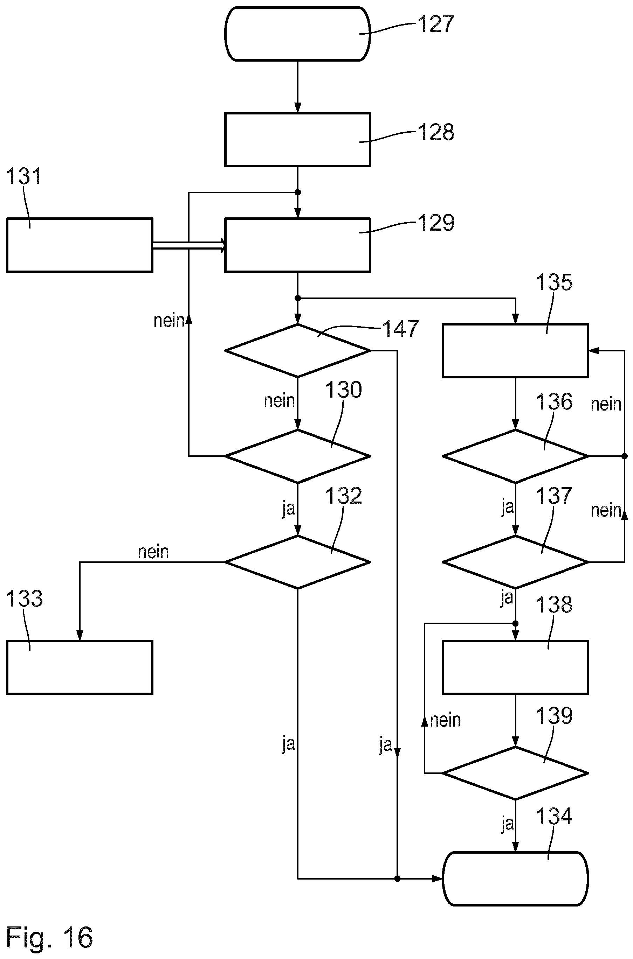

Bezugnehmend auf die Fig. 16, wird nachfolgend eine bevorzugte Navigation eines Flurförderzeugs 25 detaillierter beschrieben.

In einem ersten Schritt 127 empfängt das zu navigierende Flurförderzeug 25 einen Fahrauftrag von der übergeordneten Steuerung.

In einem nächsten Schritt 128 berechnet bzw. bestimmt die Flurförderzeug-Steuereinheit 85 einen geeigneten Fahrweg für das Flurförderzeug 25 zur Ausführung des Fahrauftrags.

In einem nächsten Schritt 129 betätigt die Flurförderzeug-Steuereinheit 85 des Flurförderzeugs 25 gegebenenfalls den Verfahrantrieb und/oder die Lenkung des Flurförderzeugs 25 gegenüber einer Abweichung von einer Ideal- bzw. Soll-Linie bzw. zum Reduzieren dieser Abweichung.

Permanent bzw. ständig erfolgt gemäß einem Schritt 131 eine Ortung durch den an dem Flurförderzeug 25 angeordneten Navigationssensor 103, der vorzugsweise als 2D-360°-Lidar (light detection and ranging) ausgebildet ist, und eine Übergabe von Positionsdaten des Flurförderzeugs 25 an einen Navigationsrechner, welcher zunächst eine Steuerung des Flurförderzeugs 25 übernimmt. Eine Grobnavigation des Flurförderzeugs 25 ist so verwirklicht.

In einem auf den Schritt 129 folgenden Schritt 147 erfolgt eine Abfrage, ob die Soll- und Ist-Koordinaten einer anzufahrenden Materialrolle 11 übereinstimmen. Diese Abfrage entspricht einer Abfrage 137, auf die nachfolgend noch eingegangen wird, als Ergebnis der Objekt-Erkennungsvorrichtung 104 des Flurförderzeugs 25 und/oder dessen Materialrollen-Erfassungsvorrichtung.

Falls die Soll- und Ist-Koordinaten der anzufahrenden Materialrolle 11 nicht übereinstimmen, erfolgt in einem nächsten Schritt 130 eine Abfrage, ob das Flurförderzeug 25 seine Soll- bzw. Zielposition durch die angegebene Grobnavigation erreicht hat.

Falls die Abfrage gemäß dem Schritt 130 ergibt, dass das Flurförderzeug 25 seine Zielposition durch die angegebene Grobnavigation erreicht hat, erfolgt gemäß Schritt 132 eine Abfrage, ob die anzufahrende Materialrolle 11 erkannt bzw. erreicht worden ist. Diese Prüfung erfolgt günstigerweise durch die Objekt-Erkennungsvorrichtung 104 des Flurförderzeugs 25 und/oder dessen Materialrollen-Erfassungsvorrichtung. Sie geschieht ab Erhalt des Fahrauftrags gemäß Schritt 127 permanent bzw. ständig. Die Objekt-Erkennungsvorrichtung 104 und/oder Materialrollen-Erfassungsvorrichtung sucht nach Erhalt des Fahrauftrags permanent bzw. ständig nach Materialrollen 11 und gibt für identifizierte Materialrollen 11 Identifikations- bzw. Positionskoordinaten an die Flurförderzeug-Steuereinheit 85 weiter. Die Objekt-Erkennungsvorrichtung 104 ist bevorzugt als 3D-Kamera ausgeführt.

Falls die Abfrage gemäß dem Schritt 130 ergibt, dass das Flurförderzeug 25 seine Sollposition durch die angegebene Grobnavigation nicht erreicht hat, wird zu dem Schritt 129 zurückgekehrt.

Falls die Abfrage gemäß dem Schritt 132 ergibt, dass die anzufahrende Materialrolle 11 nicht erkannt bzw. erreicht worden ist, wird in einem nächsten Schritt 133 eine Störung ausgegeben.

Falls die Abfrage gemäß dem Schritt 132 ergibt, dass die anzufahrende Materialrolle 11 erkannt bzw. erreicht worden ist, wird in einem nächsten Schritt 134 auf den Schritt 132 hin eine Rückmeldung an die übergeordnete Steuerung ausgegeben, wonach das "Ziel" erreicht worden ist.

Falls die Abfrage gemäß dem Schritt 147 ergibt, dass die Soll- und Ist-Koordinaten der anzufahrenden Materialrolle 11 übereinstimmen, folgt gleich der Schritt 134.

Auf den Schritt 129 hin erfolgt gemäß einem Schritt 135 mittels der Objekt-Erkennungsvorrichtung 104 und/oder der Materialrollen-Erfassungsvorrichtung eine Suche nach der anzufahrenden Materialrolle 11. Wie erwähnt, geschieht eine solche Suche ab Erhalt des Fahrauftrags gemäß Schritt 127 permanent bzw. ständig.

In einem Schritt 136 erfolgt eine Abfrage, ob mittels der Objekt-Erkennungsvorrichtung 104 und/oder der Materialrollen-Erfassungsvorrichtung die anzufahrende Materialrolle 11 erkannt worden ist.

Falls die Abfrage gemäß dem Schritt 136 ergibt, dass die anzufahrende Materialrolle 11 nicht erkannt worden ist, wird zu dem Schritt 135 zurückgekehrt. Der Schritt 135 wird wiederholt.

Falls die Abfrage gemäß dem Schritt 136 ergibt, dass die anzufahrende Materialrolle 11 erkannt worden ist, erfolgt in einem nächsten Schritt 137 eine Prüfung, ob die Soll- und Ist-Koordinaten der anzufahrenden Materialrolle 11 übereinstimmen.

Falls die Prüfung gemäß dem Schritt 137 ergibt, dass die Soll- und Ist-Koordinaten der anzufahrenden Materialrolle 11 nicht übereinstimmen, wird zu dem Schritt 136 zurückgekehrt. Es wurde eine unrichtige Materialrolle 11 angesteuert. Der Schritt 136 wird wiederholt.

Falls die Prüfung gemäß dem Schritt 137 ergibt, dass die Soll- und Ist-Koordinaten der anzufahrenden Materialrolle 11 übereinstimmen, erfolgt in einem nächsten Schritt 138 eine Kontrolle der Steuerung durch die Objekt-Erkennungsvorrichtung 104 und/oder Materialrollen-Erfassungsvorrichtung. Es wurde die richtige Materialrolle 11 angefahren.

In einem nächsten Schritt 139 erfolgt eine Abfrage, ob das Flurförderzeug 25 seine Zielposition erreicht hat.

Falls die Abfrage gemäß dem Schritt 139 ergibt, dass das Flurförderzeug 25 seine Zielposition nicht erreicht hat, wird zu dem Schritt 138 zurückgekehrt. Der Schritt 138 wird wiederholt.

Falls die Abfrage gemäß dem Schritt 139 ergibt, dass das Flurförderzeug 25 seine Zielposition erreicht hat, folgt der Schritt 134.

Die Navigation über den Navigationssensor 103 steuert quasi so lange das Flurförderzeug 25 bis eine Materialrolle 11 in passender Position gefunden worden ist. Ab diesem Zeitpunkt übernimmt die Objekt-Erkennungsvorrichtung 104 und/oder Materialrollen-Erfassungsvorrichtung den Verfahrantrieb und/oder die Lenkung des Flurförderzeugs 25 bis die Materialrolle 11 gegriffen worden ist (Feinnavigation) und eine erfolgreiche Aufnahme der Materialrolle 11 an die übergeordnete Steuerung übermittelt worden ist.

Die geschilderte Navigation des Flurförderzeugs 25 kommt günstigerweise bei Entladung der Materialrollen 11 von dem Sattelzug 62, dem Abstellen der Materialrollen 11 in dem Materialrollenlager 10 und/oder der Aufnahme der Materialrollen 11 in dem Materialrollenlager 10 zum Einsatz. Wie erwähnt, kommt dafür günstigerweise die Objekt-Erkennungsvorrichtung 104 und/oder deren Materialrollen-Erfassungsvorrichtung und/oder eine weitere Objekt-Erkennungsvorrichtung und/oder deren weitere Materialrollen-Erfassungsvorrichtung zum Einsatz. Eine weitere Objekt-Erkennungsvorrichtung 104 bzw. Materialrollen-Erfassungsvorrichtung ist insbesondere dann notwendig, falls bei gegriffener Materialrolle 11 die Sicht verdeckt ist.

Die Objekt-Erkennungsvorrichtung 104 bzw. deren Materialrollen-Erfassungsvorrichtung erkennt einen freien Zugang für ein Entladen der Materialrollen 11 und ist im Stande, eine genau Absetzposition in einer Endpositionierung der Materialrolle 11 zu übernehmen und zu kontrollieren (wie z. B. bei einer Ladekantenerkennung an einem Sattelzug).

Durch die ständige Ortung über den Navigationssensor 103 sind die Materialrollen 11 immer identifizierbar und deren Positionsdaten permanent bekannt, was eine permanente Aktualisierung in einer Datenbank erlaubt. Es erfolgt also bevorzugt ein Einsatz von mindestens einer 3D-Kamera in Kombination mit einer Ortung und Navigation mittels mindestens eines 2D-Lidars und eine Definition und Identifizierung der Materialrollen 11 über ihre Koordinaten, unabhängig von einer Betriebsart (automatisiert - manuell) des Flurförderzeugs 25.

In dem Materialrollenlager 10 wird günstigerweise jeder Position von einer Materialrolle 11 eine Markerposition zugeordnet. Dem Flurförderzeug 25 wird bei einem Fahrauftrag eine Anfahrtsrichtung mitgeteilt ebenso wie eine Höheninformation, was insbesondere dann gilt, wenn mehrere Materialrollen 11 in dem Materialrollenlager 10 übereinander angeordnet sind.

Für eine Koordinatenvergabe wird günstigerweise ein Gebäude-Nullpunkt, wie Hallen-Nullpunkt, vergeben.

Es ist zweckmäßig, wenn nach eindeutiger Identifizierung der zu überführenden Materialrolle eine Feinnavigation erfolgt bzw. eine Kontrolle über eine Bewegung der Überführungsanordnung 25 übernimmt.

Eine Identifizierung der zu überführenden Materialrolle 11 erfolgt vorzugsweise über Koordinaten (wie Volumenschwerpunkt oder Mittelpunkt Grundfläche) und/oder Abmessungen, die in einer Datenbank zusammen mit Materialdaten verwaltet sind.

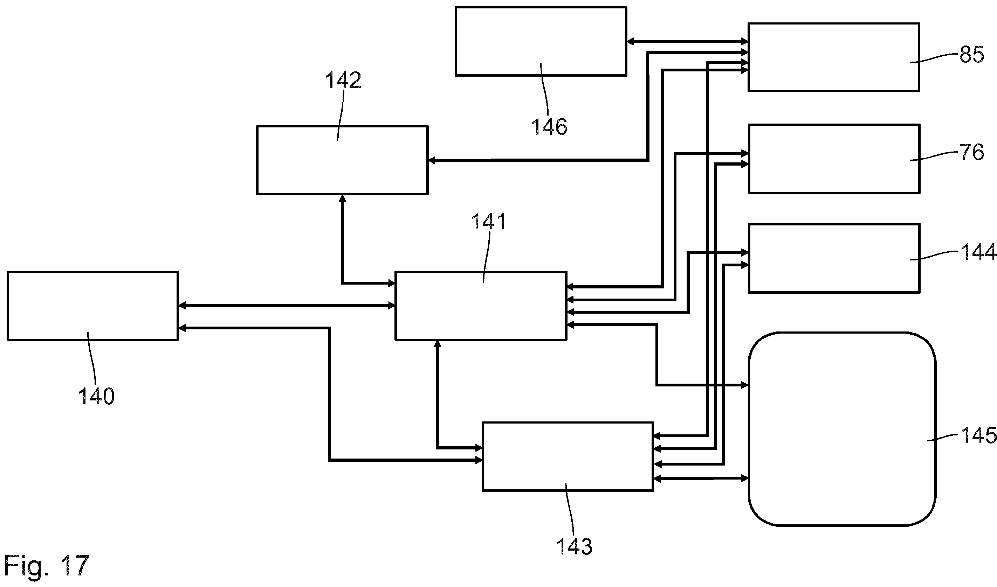

Nachfolgend wird unter Bezugnahme auf Fig. 17 eine bevorzugte Steuerung der Gesamtanlage noch veranschaulicht.

Die Wellpappeanlage 1 ist mittels einer Wellpappeanlagen-Steuerung 140 steuerbar. Die Wellpappeanlagen-Steuerung 140 steht mit einer übergeordneten bzw. zentralen Steuerung 141 in Signalverbindung. Signale bzw. Informationen sind bidirektional übertragbar.

Die übergeordnete Steuerung 141 wiederum steht mit einer Lagerverwaltung 142 zur Verwaltung des Materialrollenlagers 10 in Signalverbindung. Signale bzw. Informationen sind bidirektional übertragbar.

Die übergeordnete Steuerung 141 steht wiederum mit einer Sicherheitssteuerung 143 in Signalverbindung. Signale bzw. Informationen sind bidirektional übertragbar.

Die übergeordnete Steuerung 141 steht außerdem mit den Flurförderzeug-Steuereinheiten 85, dem Bedienterminal 76, einer Steuerung 144 des Übergabesystems 29 und Transportwagen-Steuerungen 145 der Transportwagen 32 in Signalverbindung. Signale bzw. Informationen sind jeweils bidirektional übertragbar.

Die Flurförderzeug-Steuereinheiten 85 stehen außerdem mit einer Flurförderzeug-Ortungs- und Navigationseinheit 146 in Signalverbindung. Signale bzw. Informationen sind bidirektional übertragbar.

Die Flurförderzeug-Steuereinheiten 85 stehen außerdem mit der Sicherheitssteuerung 143 in Signalverbindung. Signale bzw. Informationen sind bidirektional übertragbar.

Das Bedienterminal 76 steht außerdem mit der Sicherheitssteuerung 143 in Signalverbindung. Signale bzw. Informationen sind bidirektional übertragbar. Die Sicherheitssteuerung 143 steht insbesondere auch mit der Anliefer- bzw. Entlade-Sicherheitseinrichtung 74 in Signalverbindung.

Die Steuerung 144 des Übergabesystems 29 steht außerdem mit der Sicherheitssteuerung 143 in Signalverbindung. Signale bzw. Informationen sind bidirektional übertragbar.

Die Transportwagen-Steuerungen 145 stehen mit der Sicherheitssteuerung 143 in Signalverbindung. Signale bzw. Informationen sind bidirektional übertragbar. Die Sicherheitssteuerung steht insbesondere auch mit der Sicherheits-Laserscanvorrichtungen 108 in Signalverbindung.

Die Sicherheitssteuerung 143 steht außerdem mit der Wellpappeanlagen-Steuerung 140 in Signalverbindung. Signale bzw. Informationen sind bidirektional übertragbar.

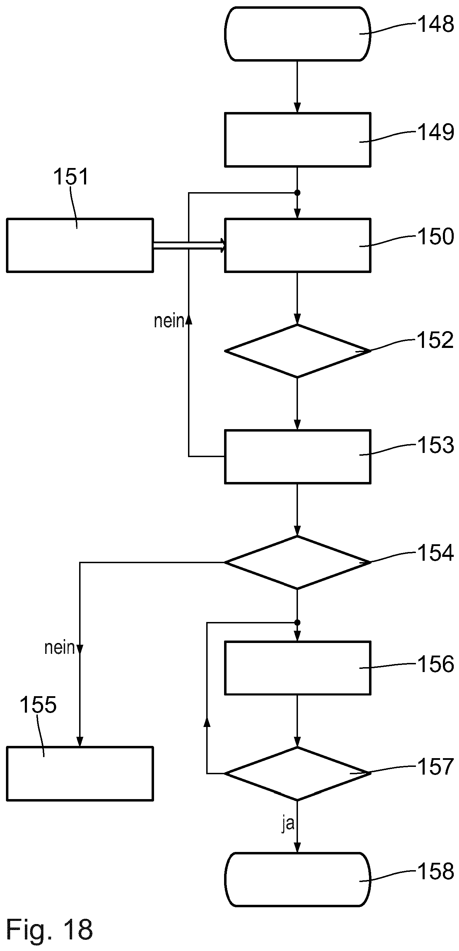

Bezugnehmend auf die Fig. 18, wird nachfolgend ein bevorzugtes Absetzen einer Materialrolle 11 mittels eines Flurförderzeugs 25 detaillierter beschrieben.

In einem ersten Schritt 148 empfängt das zu navigierende Flurförderzeug 25 einen Fahrauftrag von der übergeordneten Steuerung.

In einem nächsten Schritt 149 berechnet bzw. bestimmt die Flurförderzeug-Steuereinheit 85 einen geeigneten Fahrweg für das Flurförderzeug 25 zur Ausführung des Fahrauftrags.

In einem nächsten Schritt 150 betätigt die Flurförderzeug-Steuereinheit 85 des Flurförderzeugs 25 gegebenenfalls den Verfahrantrieb und/oder die Lenkung des Flurförderzeugs 85 gegenüber einer Abweichung von einer Ideal- bzw. Soll-Linie bzw. zum Reduzieren dieser Abweichung.

Permanent bzw. ständig erfolgt gemäß einem Schritt 151 eine Ortung durch den an dem Flurförderzeug 25 angeordneten Navigationssensor 103, der vorzugsweise als 2D-360°-Lidar (light detection and ranging) ausgebildet ist, und eine Übergabe von Positionsdaten des Flurförderzeugs 25 an einen Navigationsrechner, welcher zunächst eine Steuerung des Flurförderzeugs 25 übernimmt. Eine Grobnavigation des Flurförderzeugs 25 ist so verwirklicht.

In einem nächsten Schritt 152 erfolgt eine Abfrage, ob das Flurförderzeug 25 seine Soll- bzw. Zielposition durch die angegebene Grobnavigation erreicht hat.

Falls die Abfrage gemäß dem Schritt 152 ergibt, dass das Flurförderzeug 25 seine Sollposition durch die angegebene Grobnavigation nicht erreicht hat, wird zu dem Schritt 150 zurückgekehrt.

Falls die Abfrage gemäß dem Schritt 152 ergibt, dass das Flurförderzeug 25 seine Sollposition durch die angegebene Grobnavigation erreicht hat, erfolgt in einem Schritt 153 mittels der Objekt-Erkennungsvorrichtung 104 und/oder Materialrollen-Erfassungsvorrichtung eine Bewertung des Absetzpunkts bzw. -platzes.

In einem nächsten Schritt 154 wird bewertet, ob der Absetzpunkt frei zugänglich ist.

Falls die Bewertung ergibt, dass der Absetzpunkt nicht frei zugänglich ist, wird in einem Schritt 155 eine Störung ausgegeben. Ein manueller Betrieb des Flurförderzeugs 25 ist dann notwendig.

Falls die Bewertung ergibt, dass der Absetzpunkt frei zugänglich ist, erfolgt in einem nächsten Schritt 156 eine Kontrolle des Flurförderzeugs 25 bzw. eine Steuerung desselben durch die Objekt-Erkennungsvorrichtung 104 und/oder Materialrollen-Erfassungsvorrichtung unter Berücksichtigung einer Absetzhöhe der Materialrolle 11. Eine Feinnavigation des Flurförderzeugs 25 ist so verwirklicht.

In einem nächsten Schritt 157 erfolgt eine Prüfung, ob die Materialrolle 11 abgesetzt worden ist. Falls die Materialrolle 11 abgesetzt worden ist, erfolgt in einem nächsten Schritt 158 eine Rückmeldung an die übergeordnete Steuerung, dass das "Ziel erreicht" sei.

Besonders vorteilhaft ist die angegebene Kombination aus Grob- und Feinnavigation mit der Güter-Identifizierung über die Positionskoordinaten der gegriffenen Materialrolle 11, unabhängig von einer Betriebsart des Flurförderzeugs 25.

Gemäß einer alternativen Ausführungsform wird Wellpappe hergestellt, die sich in ihrer Lagenanzahl von der beschriebenen Wellpappe unterscheidet. Die dazu eingesetzte Wellpappeanlage 1 ist entsprechend geändert.

## Patentansprüche

1. Automatisierte Überführungsanordnung (25) zum Überführen von Gütern (11), insbesondere Materialrollen,
a) mit einem Rahmen (79),
b) mit einer an dem Rahmen (79) angeordneten Verfahreinrichtung zum Verfahren des Rahmens (79),
c) mit einer mit dem Rahmen (79) in Verbindung stehenden Greifvorrichtung (87) zum Greifen von einem Gut (11), wobei die Greifvorrichtung (87) umfasst
i) eine erste Greifarmeinrichtung (93) zum Angreifen an dem zu greifenden Gut (11), und
ii) eine zweite Greifarmeinrichtung (95) zum Angreifen an dem zu greifenden Gut (11) beabstandet zu der ersten Greifarmeinrichtung (93),
d) mit einer Steuereinheit (85) zum Steuern eines automatisierten Greifens des zu greifenden Guts (11) mittels der Greifvorrichtung (87), und
e) mit einer Güter-Erfassungsvorrichtung (101, 102) zum Erfassen des zu greifenden Guts (11), wobei die Güter-Erfassungsvorrichtung eine Güter-Erfassungseinheit (101) zum Erfassen von äußeren Abschnitten des zu greifenden Guts (11) aufweist,
**gekennzeichnet durch**
f) eine Mittelachsen-Sollpositions-Bestimmungseinheit zum Bestimmen einer Sollposition einer Mittelachse des zu greifenden Guts (11), und
g) eine Abgleicheinheit zum Abgleichen der Sollposition der Mittelachse des zu greifenden Guts (11) mit einer Mittelachsen-Istposition des zu greifenden Guts (11),
h) wobei die Steuereinheit (85) die Verfahreinrichtung in Abhängigkeit eines Abgleichs **durch** die Abgleicheinheit ansteuert.

2. Überführungsanordnung nach Anspruch 1, **dadurch gekennzeichnet, dass** die Steuereinheit (85) mit der Greifvorrichtung (87) zum Ansteuern der Greifvorrichtung (87) in Signalverbindung steht.

3. Überführungsanordnung nach Anspruch 1 oder 2, **dadurch gekennzeichnet, dass** die Steuereinheit (85) mit der Verfahreinrichtung zum Ansteuern der Verfahreinrichtung in Signalverbindung steht.

4. Überführungsanordnung nach einem der vorherigen Ansprüche,
**dadurch gekennzeichnet, dass** die Steuereinheit (85) die Greifvorrichtung (87) in Abhängigkeit einer bekannten Abmessung, insbesondere Querabmessung, insbesondere Durchmessers, des zu greifenden Guts (11) ansteuert.

5. Überführungsanordnung nach einem der vorherigen Ansprüche,
**dadurch gekennzeichnet, dass** die Steuereinheit (85) die Verfahreinrichtung in Abhängigkeit einer bekannten Abmessung, insbesondere Querabmessung, insbesondere Durchmessers, des zu greifenden Guts (11) ansteuert.

6. Überführungsanordnung nach einem der vorherigen Ansprüche,
**dadurch gekennzeichnet, dass** die Steuereinheit (85) für das Greifen des zu greifenden Guts (11) eine Stellung der Greifvorrichtung (87) berücksichtigt.

7. Überführungsanordnung nach einem der vorherigen Ansprüche,
**dadurch gekennzeichnet, dass** die zweite Greifarmeinrichtung (94) länger als die erste Greifarmeinrichtung (93) ist.

8. Überführungsanordnung nach Anspruch 7, **dadurch gekennzeichnet, dass** die Steuereinheit (85) die Verfahreinrichtung in Abhängigkeit einer vorpositionierten Stellung der ersten Greifarmeinrichtung (93) ansteuert.

9. Überführungsanordnung nach einem der vorherigen Ansprüche,
**dadurch gekennzeichnet, dass** die Steuereinheit (85) die zweite Greifarmeinrichtung (94) in Abhängigkeit eines Abgleichs durch die Abgleicheinheit ansteuert.

10. Überführungsanordnung nach einem der vorherigen Ansprüche,
**dadurch gekennzeichnet, dass** die Verfahreinrichtung mindestens einen Verfahrantrieb umfasst.

11. Überführungsanordnung nach einem der vorherigen Ansprüche, **gekennzeichnet durch** einen Navigationssensor (103) zum Navigieren der Überführungsanordnung (25).

12. Überführungsanordnung nach einem der vorherigen Ansprüche,
**dadurch gekennzeichnet, dass** die Steuereinheit (85) zur Ansteuerung der Greifvorrichtung (87) im Stande ist, Signale von einer übergeordneten Steuerung (141) zu empfangen.

13. Überführungsanordnung nach einem der vorherigen Ansprüche,
**dadurch gekennzeichnet, dass** die Steuereinheit (85) zur Ansteuerung der Verfahreinrichtung im Stande ist, Signale von einer übergeordneten Steuerung (141) zu empfangen.

14. Überführungsanordnung nach einem der vorherigen Ansprüche,
**dadurch gekennzeichnet, dass** die erste Greifarmeinrichtung (93) und zweite Greifarmeinrichtung (94) zumindest bereichsweise relativ zueinander verschwenkbar sind.

15. Gesamtanlage mit mindestens einer Überführungsanordnung (25) nach einem der vorherigen Ansprüche und, insbesondere mit einer Anlage (1), insbesondere Wellpappeanlage.

16. Gesamtanlage nach Anspruch 15, **gekennzeichnet durch** eine übergeordnete Steuerung (141), die Positionen aller mittels der mindestens einen Überführungsanordnung (25) überführten Güter (11) kennt.

17. Güter-Überführungs-Verfahren zum automatisierten Überführen von Gütern (11), insbesondere Materialrollen, umfassend die Schritte
- Bestimmen einer Sollposition einer Mittelachse eines zu greifenden Guts (11), insbesondere Materialrolle, mittels einer Mittelachsen-Sollpositions-Bestimmungseinheit,
- Abgleichen der Sollposition der Mittelachse des zu greifenden Guts (11) mit einer Mittelachsen-Istposition des zu greifenden Guts (11) mittels einer Abgleicheinheit,
- Verfahren einer eine erste Greifarmeinrichtung (93) zum Angreifen an einem zu greifenden Gut (11) und eine zweite Greifarmeinrichtung (94) zum Angreifen an dem zu greifenden Gut (11) beabstandet zu der ersten Greifarmeinrichtung (93) aufweisende Greifvorrichtung (87) mittels einer Verfahreinrichtung zu dem zu greifenden Gut (11),
- Ansteuern der Verfahreinrichtung in Abhängigkeit eines Abgleichs durch die Abgleicheinheit mittels einer Steuereinheit (85), und
- automatisiertes Greifen des Guts (11) mittels der Greifvorrichtung (87) unter Verwendung der Steuereinheit (85).

## Claims

1. Automated transfer arrangement (25) for transferring articles (11), in particular material rolls,
a) having a frame (79),
b) having a displacement device arranged on the frame (79) for displacing the frame (79),
c) having a gripping device (87) connected to the frame (79) for gripping an article (11), wherein the gripping device (87) comprises
i) a first gripping arm device (93) for engaging the article (11) to be gripped, and
ii) a second gripping arm device (95) for engaging the article (11) to be gripped spaced apart from the first gripping arm device (93),
d) having a control unit (85) for controlling automated gripping of the article (11) to be gripped by means of the gripping device (87), and
e) having an article detection device (101, 102) for detecting the article (11) to be gripped, wherein the article detection device has an article detection unit (101) for detecting outer sections of the article (11) to be gripped,
**characterised by**
f) a central axis target position determination unit for determining a target position of a central axis of the article (11) to be gripped, and
g) a comparison unit for comparing the target position of the central axis of the article (11) to be gripped with an actual central axis position of the article (11) to be gripped,
h) wherein the control unit (85) controls the displacement device based on the comparison performed by the comparison unit.

2. Transfer arrangement according to Claim 1, **characterised in that** the control unit (85) is in signal communication with the gripping device (87) for controlling the gripping device (87).

3. Transfer arrangement according to Claim 1 or 2, **characterised in that** the control unit (85) is in signal communication with the displacement device for controlling the displacement device.

4. Transfer arrangement according to one of the preceding claims, **characterised in that** the control unit (85) controls the gripping device (87) as a function of a known dimension, in particular transverse dimension, in particular diameter, of the article (11) to be gripped.

5. Transfer arrangement according to one of the preceding claims, **characterised in that** the control unit (85) controls the displacement device as a function of a known dimension, in particular transverse dimension, in particular diameter, of the article (11) to be gripped.

6. Transfer arrangement according to one of the preceding claims, **characterised in that** the control unit (85) takes into account a position of the gripping device (87) for gripping the article (11) to be gripped.

7. Transfer arrangement according to one of the preceding claims, **characterised in that** the second gripping arm device (94) is longer than the first gripping arm device (93).

8. Transfer arrangement according to Claim 7, **characterised in that** the control unit (85) controls the displacement device as a function of a pre-positioned position of the first gripping arm device (93).

9. Transfer arrangement according to one of the preceding claims, **characterised in that** the control unit (85) controls the second gripping arm device (94) as a function of a comparison performed by the comparison unit.

10. Transfer arrangement according to one of the preceding claims, **characterised in that** the displacement device comprises at least one displacement drive.

11. Transfer arrangement according to one of the preceding claims, **characterised by** a navigation sensor (103) for navigating the transfer arrangement (25).

12. Transfer arrangement according to one of the preceding claims, **characterised in that** the control unit (85) is able to receive signals from a higher-level controller (141) for controlling the gripping device (87).

13. Transfer arrangement according to one of the preceding claims, **characterised in that** the control unit (85) is able to receive signals from a higher-level controller (141) for controlling the displacement device.

14. Transfer arrangement according to one of the preceding claims, **characterised in that** the first gripping arm device (93) and second gripping arm device (94) can be pivoted relative to one another at least in areas.

15. Overall system having at least one transfer arrangement (25) according to one of the preceding claims and, in particular having a system (1), in particular corrugator system.

16. Overall system according to Claim 15, **characterised by** a higher-level controller (141), which knows the positions of all articles (11) transferred by means of the at least one transfer arrangement (25).

17. Article transfer method for the automated transfer of articles (11), in particular material rolls, comprising the steps of
- determining a target position of a central axis of an article (11) to be gripped, in particular material roll, by means of a central axis target position determination unit,
- comparing the target position of the central axis of the article (11) to be gripped with an actual central axis position of the article (11) to be gripped by means of a comparison unit,
- displacing a gripping device (87) having a first gripping arm device (93) for engaging an article (11) to be gripped and a second gripping arm device (94) for engaging the article (11) to be gripped spaced apart from the first gripping arm device (93) by means of a displacement device towards the article (11) to be gripped,
- controlling the displacement device as a function of a comparison performed by the comparison unit by means of a control unit (85), and
- automated gripping of the article (11) by means of the gripping device (87) using the control unit (85).

## Revendications

1. Ensemble de transfert automatisé (25) destiné à transférer des marchandises (11), en particulier des rouleaux de matériau :
a) comportant un châssis (79),
b) comportant un dispositif de déplacement agencé sur le châssis (79) pour déplacer le châssis (79),
c) comportant un dispositif de préhension (87) en liaison avec le châssis (79) pour saisir une marchandise (11), dans lequel le dispositif de préhension (87) comprend :
i) un premier dispositif à bras de préhension (93) destiné à venir en prise avec le matériau à saisir (11), et
ii) un second dispositif à bras de préhension (95) destiné à venir en prise avec le matériau à saisir (11) de manière espacée par rapport au premier dispositif à bras de préhension (93),
d) comportant une unité de commande (85) pour commander une préhension automatisée de la marchandise à saisir (11) au moyen du dispositif de préhension (87), et
e) comportant un dispositif de détection de marchandise (101, 102) pour détecter la marchandise à saisir (11), dans lequel le dispositif de détection de marchandise comporte une unité de détection de marchandise (101) pour détecter des parties extérieures de la marchandise à saisir (11),
**caractérisé par**
f) une unité de détermination de position de consigne d'axe central pour déterminer une position de consigne d'un axe central du matériau à saisir (11), et
g) une unité de comparaison pour comparer la position de consigne de l'axe central du matériau à saisir (11) avec une position réelle d'axe central du matériau à saisir (11) ;
h) dans lequel l'unité de commande (85) commande le dispositif de déplacement en fonction d'une comparaison effectuée par l'unité de comparaison.

2. Ensemble de transfert selon la revendication 1, **caractérisé en ce que** l'unité de commande (85) est en liaison par signaux avec le dispositif de préhension (87) pour commander le dispositif de préhension (87).

3. Ensemble de transfert selon la revendication 1 ou 2, **caractérisé en ce que** l'unité de commande (85) est en liaison par signaux avec le dispositif de déplacement pour commander le dispositif de déplacement.

4. Ensemble de transfert selon l'une des revendications précédentes, **caractérisé en ce que** l'unité de commande (85) commande le dispositif de préhension (87) en fonction d'une dimension connue, en particulier une dimension transversale, en particulier un diamètre, de la marchandise à saisir (11).

5. Ensemble de transfert selon l'une des revendications précédentes, **caractérisé en ce que** l'unité de commande (85) commande le dispositif de déplacement en fonction d'une dimension connue, en particulier une dimension transversale, en particulier un diamètre, de la marchandise à saisir (11).

6. Ensemble de transfert selon l'une des revendications précédentes, **caractérisé en ce que,** pour saisir la marchandise à saisir (11), l'unité de commande (85) tient compte d'une position du dispositif de préhension (87).

7. Ensemble de transfert selon l'une des revendications précédentes, **caractérisé en ce que** le second dispositif à bras de préhension (94) est plus long que le premier dispositif à bras de préhension (93).

8. Ensemble de transfert selon la revendication 7, **caractérisé en ce que** l'unité de commande (85) commande le dispositif de déplacement en fonction d'une position prépositionnée du premier dispositif à bras de préhension (93).

9. Ensemble de transfert selon l'une des revendications précédentes, **caractérisé en ce que** l'unité de commande (85) commande le second dispositif à bras de préhension (94) en fonction d'une comparaison effectuée par l'unité de comparaison.

10. Ensemble de transfert selon l'une des revendications précédentes, **caractérisé en ce que** le dispositif de déplacement comprend au moins un entraînement de déplacement.

11. Ensemble de transfert selon l'une des revendications précédentes, **caractérisé par** un capteur de navigation (103) pour la navigation de l'ensemble de transfert (25).

12. Ensemble de transfert selon l'une des revendications précédentes, **caractérisé en ce que** l'unité de commande (85) est capable de recevoir des signaux provenant d'une commande maître (141) pour commander le dispositif de préhension (87).

13. Ensemble de transfert selon l'une des revendications précédentes, **caractérisé en ce que** le dispositif de commande (85) est capable de recevoir des signaux provenant d'une commande maître (141) pour commander le dispositif de déplacement.

14. Ensemble de transfert selon l'une des revendications précédentes, **caractérisé en ce que** le premier dispositif à bras de préhension (93) et le second dispositif à bras de préhension (94) peuvent pivoter l'un par rapport à l'autre au moins par sections.

15. Installation complète comportant au moins un ensemble de transfert (25) selon l'une des revendications précédentes et, en particulier comportant une installation (1), en particulier une installation de fabrication de carton ondulé.

16. Installation complète selon la revendication 15, **caractérisée par** une commande maître (141) qui connaît les positions de toutes les marchandises (11) transférées au moyen du au moins un ensemble de transfert (25).

17. Procédé de transfert de marchandises destiné à transférer automatiquement des marchandises (11), en particulier des rouleaux de matériau, comprenant les étapes consistant à
- déterminer une position de consigne d'un axe central d'une marchandise à saisir (11), en particulier d'un rouleau de matériau, au moyen d'une unité de détermination de position de consigne d'axe central,
- comparer la position de consigne de l'axe central de la marchandise à saisir (11) avec une position réelle d'axe central de la marchandise à saisir (11) au moyen d'une unité de comparaison,
- déplacer un dispositif de préhension (87) comportant un premier dispositif à bras de préhension (93) destiné à venir en prise avec une marchandise à saisir (11) et un second dispositif à bras de préhension (94) destiné à venir en prise avec la marchandise à saisir (11) de manière espacée par rapport au premier dispositif à bras de préhension (93) au moyen d'un dispositif de déplacement jusqu'à la marchandise à saisir (11),
- commander le dispositif de déplacement en fonction d'une comparaison par l'unité de comparaison, au moyen d'une unité de commande (85), et
- saisir automatiquement la marchandise (11) au moyen du dispositif de préhension (87) en utilisant l'unité de commande (85).
